# EUROPEAN PATENT APPLICATION

(11) **EP 3 142 048 A1**
(43) Date of publication of application: **15.03.2017**
(21) Application number: 16189991.9
(22) Date of filing: 10.04.2013
(51) Int. Cl.: G06N 5/04, G06N 99/00, G06F 21/55, G06F 21/56

(54) **ARCHITECTURE FOR CLIENT-CLOUD BEHAVIOR ANALYZER**

(30) Priority: 14.05.2012 US 201261646590 P; 15.08.2012 US 201261683274 P; 02.01.2013 US 201361748220 P; 25.02.2013 US 201313776414
(62) Divisional of application: 13718702.7
(71) Applicant: QUALCOMM Incorporated, San Diego CA 92121-1714 (US)
(72) Inventor: GUPTA, Rajarshi, San Diego, CA 92121-1714 (US); WEI, Xuetao, San Diego, CA 92121-1714 (US); GATHALA, Anil, San Diego, CA 92121-1714 (US); SRIDHARA, Vinay, San Diego, CA 92121-1714 (US)
(74) Representative: Hohgardt, Martin

(57) **Abstract**

A method of evaluating a mobile device behavior in stages, comprising: monitoring mobile device behaviors to generate observations; applying the observations to an initial reduced feature set model to determine whether the mobile device behavior is performance-degrading, benign, or suspicious; monitoring additional or different mobile device behaviors to generate refined observations when it is determined that the mobile device behavior is suspicious; and applying the refined observations to a subsequent reduced feature set model to determine whether the mobile device behavior is performance-degrading or benign as well as a corresponding mobile device, a corresponding method for a server and a corresponding server.

## Description

### RELATED APPLICATIONS

This application claims the benefit of priority to U.S. Provisional Patent Application No. 61/748,220 entitled "Architecture for Client-Cloud Behavior Analyzer" filed January 2, 2013; U.S. Provisional Patent Application No. 61/646,590 entitled "System, Apparatus and Method for Adaptive Observation of Mobile Device Behavior" filed May 14, 2012; and U.S. Provisional Application No. 61/683, 274, entitled "System, Apparatus and Method for Adaptive Observation of Mobile Device Behavior" filed August 15, 2012, the entire contents of all of which are hereby incorporated by reference for all purposes.

### BACKGROUND

Cellular and wireless communication technologies have seen explosive growth over the past several years. This growth has been fueled by better communications, hardware, larger networks, and more reliable protocols. Wireless service providers are now able to offer their customers an ever-expanding array of features and services, and provide users with unprecedented levels of access to information, resources, and communications. To keep pace with these service enhancements, mobile electronic devices (e.g., cellular phones, tablets, laptops, etc.) have become more powerful and complex than ever. This complexity has created new opportunities for malicious software, software conflicts, hardware faults, and other similar errors or phenomena to negatively impact a mobile device's long-term and continued performance and power utilization levels. Accordingly, identifying and correcting the conditions and/or mobile device behaviors that may negatively impact the mobile device's long term and continued performance and power utilization levels is beneficial to consumers.

### SUMMARY

The various aspects include methods of generating data models in a client-cloud communication system, which may include applying machine learning techniques to generate a first family of classifier models that describe a cloud corpus of behavior vectors, determining which factors in the first family of classifier models have a high probably of enabling a mobile device to conclusively determine whether a mobile device behavior is malicious or benign, generating a second family of classifier models that identify a reduced number of factors and data points as being relevant for enabling the mobile device to conclusively determine whether the mobile device behavior is malicious or benign based on the determined factors, and generating a mobile device classifier module based on the second family of classifier models.

In an aspect, applying machine learning techniques to generate a first family of classifier models that describe a cloud corpus of behavior vectors may include generating the first family of classifier models in a deep classifier in a server of a cloud network. In a further aspect, generating a second family of classifier models may include generating the second family of classifier models in a lean classifier in a network server. In a further aspect, generating a second family of classifier models may include generating the second family of classifier models in a lean classifier in the mobile device. In a further aspect, generating a second family of classifier models that identify a reduced number of factors and data points as being relevant for enabling the mobile device to conclusively determine whether the mobile device behavior is malicious or benign may include generating the second family of classifier models by applying the determined factors to the cloud corpus of behavior vectors.

Further aspects include a server computing device having means for applying machine learning techniques to generate a first family of classifier models that describe a cloud corpus of behavior vectors, means for determining which factors in the first family of classifier models have a high probably of enabling a mobile device to conclusively determine whether a mobile device behavior is malicious or benign, means for generating, based on the determined factors, a second family of classifier models that identify a reduced number of factors and data points as being relevant for enabling the mobile device to conclusively determine whether the mobile device behavior is malicious or benign, and means for generating a mobile device classifier module based on the second family of classifier models.

In an aspect, means for applying machine learning techniques to generate a first family of classifier models that describe a cloud corpus of behavior vectors may include means for generating the first family of classifier models in a deep classifier. In a further aspect, means for generating a second family of classifier models may include means for generating the second family of classifier models in a lean classifier. In a further aspect, means for generating a second family of classifier models and may include means for transmitting the first family of classifier models and the determined factors to the mobile device. In a further aspect, means for generating a second family of classifier models that identify a reduced number of factors and data points as being relevant for enabling the mobile device to conclusively determine whether the mobile device behavior is malicious or benign may include means for generating the second family of classifier models by applying the determined factors to the cloud corpus of behavior vectors.

Further aspects include a server computing device having a processor configured with processor-executable instructions to perform operations that may include applying machine learning techniques to generate a first family of classifier models that describe a cloud corpus of behavior vectors, determining which factors in the first family of classifier models have a high probably of enabling a mobile device to conclusively determine whether a mobile device behavior is malicious or benign, generating, based on the determined factors, a second family of classifier models that identify a reduced number of factors and data points as being relevant for enabling the mobile device to conclusively determine whether the mobile device behavior is malicious or benign, and generating a mobile device classifier module based on the second family of classifier models.

In an aspect the processor may be configured with processor-executable instructions such that applying machine learning techniques to generate a first family of classifier models that describe a cloud corpus of behavior vectors may include generating the first family of classifier models in a deep classifier. In a further aspect, the processor may be configured with processor-executable instructions such that generating a second family of classifier models may include generating the second family of classifier models in a lean classifier. In a further aspect, the processor may be configured with processor-executable instructions such that generating a second family of classifier models may include transmitting the first family of classifier models and the determined factors to the mobile device. In a further aspect, the processor may be configured with processor-executable instructions such that generating a second family of classifier models that identify a reduced number of factors and data points as being relevant for enabling the mobile device to conclusively determine whether the mobile device behavior is malicious or benign may include generating the second family of classifier models by applying the determined factors to the cloud corpus of behavior vectors.

Further aspects include a non-transitory computer readable storage medium having stored thereon server-executable software instructions, which may be configured to cause a server processor to perform operations for generating data models in a client-cloud communication system. In an aspect, the operations may include applying machine learning techniques to generate a first family of classifier models that describe a cloud corpus of behavior vectors, determining which factors in the first family of classifier models have a high probably of enabling a mobile device to conclusively determine whether a mobile device behavior is malicious or benign, generating, based on the determined factors, a second family of classifier models that identify a reduced number of factors and data points as being relevant for enabling the mobile device to conclusively determine whether the mobile device behavior is malicious or benign, generating a mobile device classifier module based on the second family of classifier models.

In an aspect, the stored server-executable software instructions may be configured to cause the server processor to perform operations such that applying machine learning techniques to generate a first family of classifier models that describe a cloud corpus of behavior vectors may include generating the first family of classifier models in a deep classifier in a server of a cloud network. In a further aspect, the stored server-executable software instructions may be configured to cause the server processor to perform operations such that generating a second family of classifier models may include generating the second family of classifier models in a lean classifier in a network server. In a further aspect, the stored server-executable software instructions may be configured to cause the server processor to perform operations such that generating a second family of classifier models may include transmitting the first family of classifier models and the determined factors to the mobile device. In a further aspect, the stored server-executable software instructions may be configured to cause the server processor to perform operations such that generating a second family of classifier models that identify a reduced number of factors and data points as being relevant for enabling the mobile device to conclusively determine whether the mobile device behavior is malicious or benign may include generating the second family of classifier models by applying the determined factors to the cloud corpus of behavior vectors.

Further aspects include a client-cloud communication system that includes a mobile device and a server computing device. The server processor may be configured with server-executable instructions to perform operations that include applying machine learning techniques to generate a first family of classifier models that describe a cloud corpus of behavior vectors, determining which factors in the first family of classifier models have a high probably of enabling the mobile device to conclusively determine whether a mobile device behavior is malicious or benign, and transmitting the first family of classifier models and the determined factors to the mobile device. The mobile device processor may be configured with processor-executable instructions to perform operations including generating, based on the determined factors, a second family of classifier models that identify a reduced number of factors and data points as being relevant for enabling the mobile device to conclusively determine whether the mobile device behavior is malicious or benign, and generating a mobile device classifier module based on the second family of classifier models.

Further aspects include methods of evaluating a mobile device behavior in stages, including monitoring mobile device behaviors to generate observations, applying the observations to an initial reduced feature set model to determine whether the mobile device behavior is performance-degrading, benign, or suspicious, monitoring additional or different mobile device behaviors to generate refined observations when it is determined that the mobile device behavior is suspicious, and applying the refined observations to a subsequent reduced feature set model to determine whether the mobile device behavior is performance-degrading, performance-degrading or benign.

Further aspects include a mobile computing device having means for monitoring a mobile device behavior to generate observations, means for applying the observations to an initial reduced feature set model to determine whether the mobile device behavior is performance-degrading, benign, or suspicious, means for monitoring additional or different mobile device behaviors to generate refined observations when it is determined that the mobile device behavior is suspicious, and means for applying the refined observations to a subsequent reduced feature set model to determine whether the mobile device behavior is performance-degrading, performance-degrading or benign.

Further aspects include a mobile computing device having a processor configured with processor-executable instructions to perform operations that may include a processor configured with processor-executable instructions to perform operations including monitoring a mobile device behavior to generate observations, applying the observations to an initial reduced feature set model to determine whether the mobile device behavior is performance-degrading, benign, or suspicious, monitoring additional or different mobile device behaviors to generate refined observations when it is determined that the mobile device behavior is suspicious, and applying the refined observations to a subsequent reduced feature set model to determine whether the mobile device behavior is performance-degrading, performance-degrading or benign.

Further aspects include a non-transitory computer readable storage medium having stored thereon processor-executable software instructions configured to cause a processor to perform operations for evaluating a mobile device behavior in stages. The operations may include monitoring mobile device behaviors to generate observations, applying the observations to an initial reduced feature set model to determine whether the mobile device behavior is performance-degrading, benign, or suspicious, monitoring additional or different mobile device behaviors to generate refined observations when it is determined that the mobile device behavior is suspicious, and applying the refined observations to a subsequent reduced feature set model to determine whether the mobile device behavior is performance-degrading, performance-degrading or benign.

Further aspects include methods of receiving observation information from a plurality of mobile devices, updating a global model of behavior classification in a server of a cloud network based on the observation information received from the plurality of mobile devices, performing machine learning operations to generate a first family of classifiers based on the global model, determining whether there are enough changes to the generated first family of classifiers to warrant generating new models, determining which features in the generated first family of classifiers are best features for enabling a mobile device processor to conclusively determine whether a mobile device behavior is malicious or benign when it is determined that there are enough changes to the first family of classifiers, generating a second family of classifiers based on the best features, determining whether there are enough changes to the generated second family of classifiers to warrant generating additional new models, generating additional classifier models when it is determined that there are enough changes to the second family of classifiers, and sending the generated additional classifier models to the mobile device processor.

Further aspects include a server computing device that may include means for receiving observation information from a plurality of mobile devices, means for updating a global model of behavior classification based on the observation information received from the plurality of mobile devices, means for performing machine learning operations to generate a first family of classifiers based on the global model, means for determining whether there are enough changes to the generated first family of classifiers to warrant generating new models, means for determining which features in the generated first family of classifiers are best features for enabling a mobile device processor to conclusively determine whether a mobile device behavior is malicious or benign when it is determined that there are enough changes to the first family of classifiers, means for generating a second family of classifiers based on the best features, means for determining whether there are enough changes to the generated second family of classifiers to warrant generating additional new models, means for generating additional classifier models when it is determined that there are enough changes to the second family of classifiers, and means for sending the generated additional classifier models to the mobile device processor.

Further aspects include a server computing device that may include a processor configured with processor-executable instructions to perform operations that may include receiving observation information from a plurality of mobile devices, updating a global model of behavior classification based on the observation information received from the plurality of mobile devices, performing machine learning operations to generate a first family of classifiers based on the global model, determining whether there are enough changes to the generated first family of classifiers to warrant generating new models, determining which features in the generated first family of classifiers are best features for enabling a mobile device processor to conclusively determine whether a mobile device behavior is malicious or benign when it is determined that there are enough changes to the first family of classifiers, generating a second family of classifiers based on the best features, determining whether there are enough changes to the generated second family of classifiers to warrant generating additional new models, generating additional classifier models when it is determined that there are enough changes to the second family of classifiers, and sending the generated additional classifier models to the mobile device processor.

Further aspects include a non-transitory server-readable storage medium having stored thereon processor-executable instructions configured cause a server computing device to perform operations that may include receiving observation information from a plurality of mobile devices, updating a global model of behavior classification in a server of a cloud network based on the observation information received from the plurality of mobile devices, performing machine learning operations to generate a first family of classifiers based on the global model, determining whether there are enough changes to the generated first family of classifiers to warrant generating new models, determining which features in the generated first family of classifiers are best features for enabling a mobile device processor to conclusively determine whether a mobile device behavior is malicious or benign when it is determined that there are enough changes to the first family of classifiers, generating a second family of classifiers based on the best features, determining whether there are enough changes to the generated second family of classifiers to warrant generating additional new models, generating additional classifier models when it is determined that there are enough changes to the second family of classifiers, and sending the generated additional classifier models to the mobile device processor.

Further aspects include a client-cloud communication system that includes a mobile device and a server. The server processor may be configured with server-executable instructions to perform operations including receiving observation information from a plurality of mobile devices, updating a global model of behavior classification based on the observation information received from the plurality of mobile devices, performing machine learning operations to generate a first family of classifiers based on the global model, determining whether there are enough changes to the generated first family of classifiers to warrant generating new models, determining which features in the generated first family of classifiers are best features for enabling the mobile device processor to conclusively determine whether a mobile device behavior is malicious or benign when it is determined that there are enough changes to the first family of classifiers, generating a second family of classifiers based on the best features, determining whether there are enough changes to the generated second family of classifiers to warrant generating additional new models, generating additional classifier models when it is determined that there are enough changes to the second family of classifiers, and sending the generated additional classifier models to the mobile device processor as an initial reduced feature set model.

The mobile device processor may be configured with processor-executable instructions to perform operations including receiving the initial reduced feature set model from the server, monitoring mobile device behaviors to generate observations, applying the observations to the initial reduced feature set model to determine whether the mobile device behavior is performance-degrading, benign, or suspicious, monitoring additional or different mobile device behaviors to generate refined observations when it is determined that the mobile device behavior is suspicious, applying the refined observations to a subsequent reduced feature set model to determine whether the mobile device behavior is performance-degrading, performance-degrading or benign, and sending the refined observations and a result of applying the refined observations to the server as observation information.

### BRIEF DESCRIPTION OF THE DRAWINGS

The accompanying drawings, which are incorporated herein and constitute part of this specification, illustrate exemplary aspects of the invention, and together with the general description given above and the detailed description given below, serve to explain the features of the invention.
FIG. 1 is a communication system block diagram illustrating network components of an example telecommunication system suitable for use in the various aspects.
FIG. 2 is a block diagram illustrating example logical components and information flows in an aspect mobile device configured to determine whether a particular mobile device behavior, software application, or process is performance-degrading, suspicious, or benign.
FIG. 3 is a block diagram illustrating example components and information flows in an aspect system with a network server configured to work in conjunction with a cloud service/network to identify actively malicious or poorly written software applications and/or suspicious or performance-degrading mobile device behaviors.
FIG. 4 is a process flow diagram illustrating an aspect method of generating one or more reduced feature models including subsets of the features and data points from a full feature model.
FIGs. 5A and 5B are process flow diagrams illustrating aspect system methods of building a lean mobile device classifier model based on one or more reduced feature models.
FIG. 6 is a process flow diagram illustrating an aspect progressive analysis method of evaluating mobile device behaviors in stages.
FIG. 7 is a block diagram illustrating example components and information flows in an aspect system that includes a network sever configured to receive updates from a plurality of mobile devices.
FIGs. 8A and 8B are process flow diagrams illustrating aspect server/system methods of building a lean mobile device classifier model from a cloud corpus of behavior vectors that is continuously updated with information received from a plurality of mobile devices.
FIG. 9 is a block diagram illustrating example logical components and information flows in an observer module configured to perform dynamic and adaptive observations in accordance with an aspect.
FIG. 10 is a block diagram illustrating logical components and information flows in a computing system implementing observer daemons in accordance with another aspect.
FIG. 11 is a process flow diagram illustrating an aspect method for performing adaptive observations on mobile devices.
FIG. 12 is a component block diagram of a mobile device suitable for use in an aspect.
FIG. 13 is a component block diagram of a server device suitable for use in an aspect.

### DETAILED DESCRIPTION

The various aspects will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention or the claims.

The word "exemplary" is used herein to mean "serving as an example, instance, or illustration." Any implementation described herein as "exemplary" is not necessarily to be construed as preferred or advantageous over other implementations.

A number of different cellular and mobile communication services and standards are available or contemplated in the future, all of which may implement and benefit from the various aspects. Such services and standards include, e.g., third generation partnership project (3GPP), long term evolution (LTE) systems, third generation wireless mobile communication technology (3G), fourth generation wireless mobile communication technology (4G), global system for mobile communications (GSM), universal mobile telecommunications system (UMTS), 3GSM, general packet radio service (GPRS), code division multiple access (CDMA) systems (e.g., cdmaOne, CDMA1020TM), enhanced data rates for GSM evolution (EDGE), advanced mobile phone system (AMPS), digital AMPS (IS-136/TDMA), evolution-data optimized (EV-DO), digital enhanced cordless telecommunications (DECT), Worldwide Interoperability for Microwave Access (WiMAX), wireless local area network (WLAN), Wi-Fi Protected Access I & II (WPA, WPA2), and integrated digital enhanced network (iden). Each of these technologies involves, for example, the transmission and reception of voice, data, signaling, and/or content messages. It should be understood that any references to terminology and/or technical details related to an individual telecommunication standard or technology are for illustrative purposes only, and are not intended to limit the scope of the claims to a particular communication system or technology unless specifically recited in the claim language.

The terms "mobile computing device" and "mobile device" are used interchangeably herein to refer to any one or all of cellular telephones, smartphones, personal or mobile multi-media players, personal data assistants (PDA's), laptop computers, tablet computers, smartbooks, ultrabooks, palm-top computers, wireless electronic mail receivers, multimedia Internet enabled cellular telephones, wireless gaming controllers, and similar personal electronic devices which include a memory, a programmable processor for which performance is important, and operate under battery power such that power conservation methods are of benefit. While the various aspects are particularly useful for mobile computing devices, such as smartphones, which have limited resources and run on battery, the aspects are generally useful in any electronic device that includes a processor and executes application programs.

The term "performance degradation" is used herein to refer to a wide variety of undesirable mobile device operations and characteristics, such as longer processing times, lower battery life, loss of private data, malicious economic activity (e.g., sending unauthorized premium SMS message), operations relating to commandeering the mobile device or utilizing the phone for spying or botnet activities, etc.

The term "system on chip" (SOC) is used herein to refer to a single integrated circuit (IC) chip that contains multiple resources and/or processors integrated on a single substrate. A single SOC may contain circuitry for digital, analog, mixed-signal, and radio-frequency functions. A single SOC may also include any number of general purpose and/or specialized processors (digital signal processors, modem processors, video processors, etc.), memory blocks (e.g., ROM, RAM, Flash, etc.), and resources (e.g., timers, voltage regulators, oscillators, etc.). SOCs may also include software for controlling the integrated resources and processors, as well as for controlling peripheral devices.

The term "multicore processor" is used herein to refer to a single integrated circuit (IC) chip or chip package that contains two or more independent processing cores (e.g., CPU cores) configured to read and execute program instructions. A SOC may include multiple multicore processors, and each processor in an SOC may be referred to as a core. The term "multiprocessor" is used herein to refer to a system or device that includes two or more processing units configured to read and execute program instructions.

Generally, the performance and power efficiency of a mobile device degrade over time. Recently, anti-virus companies (e.g., McAfee, Symantec, etc.) have begun marketing mobile anti-virus, firewall, and encryption products that aim to slow this degradation. However, many of these solutions rely on the periodic execution of a computationally-intensive scanning engine on the mobile device, which may consume many of the mobile device's processing and battery resources, slow or render the mobile device useless for extended periods of time, and/or otherwise degrade the user experience. In addition, these solutions are typically limited to detecting known viruses and malware, and do not address the multiple complex factors and/or the interactions that often combine to contribute to a mobile device's degradation over time (e.g., when the performance degradation is not caused by viruses or malware). For these and other reasons, existing anti-virus, firewall, and encryption products do not provide adequate solutions for identifying the numerous factors that may contribute to a mobile device's degradation over time, for preventing mobile device degradation, or for efficiently restoring an aging mobile device to its original condition.

Various solutions exist for modeling the behavior of processes or application programs executing on a computing device, and such behavior models may be used to differentiate between malicious and benign process/programs on computing devices. However, these existing modeling solutions are not suitable for use on mobile devices because such solutions generally require the execution of computationally-intensive processes that consume a significant amount of processing, memory, and energy resources, all of which may be scarce on mobile devices. In addition, these solutions are generally limited to evaluating the behavior of individual application programs or processes, and do not provide an accurate or complete model of the performance-degrading mobile device behaviors. For these and other reasons, existing modeling solutions are not adequate for identifying the numerous factors that may contribute to a mobile device's degradation over time, for preventing mobile device degradation, or for efficiently restoring an aging mobile device to its original condition.

Various other solutions exist for detecting malicious software by using machine learning techniques. These solutions typically analyze a software application or process via an application in a cloud-based server. Such analysis may consist of a mathematical transformation to extract the features of the software application, and then executing the features on a previously generated machine learning model. The execution of the model allows improving the current model, by updating it with the new information gained from executing the current application.

However, many of these solutions are not suitable for use on mobile devices because they require evaluating a very large corpus of data, are limited to evaluating an individual application program or process, or require the execution of computationally-intensive processes in the mobile device. For example, an existing solution may apply a corpus of training data to derive a model that takes as input a feature vector derived from the application of a mathematical transformation to an individual software application. However, such a solution typically only analyzes a single software application at a time, and not a complete model of performance-degrading mobile device behaviors. Further, such a solution does not apply machine learning techniques to generate a first family of classifier models that describe a large corpus of behavior vectors, determine which factors in the first family of classifier models have the highest probably of enabling a mobile device to conclusively determine whether a mobile device behavior is malicious or benign, and generate a second family of classifier models based on the determined factors. Also, such a solution does not determine whether there are enough changes to the first and second family of classifiers to warrant generating new or additional data/behavior models. For these and other reasons, existing machine learning techniques are not well suited for use in the complex yet resource-constrained systems of modern mobile devices.

There are a variety of factors that may contribute to the degradation in performance and power utilization levels of a mobile device over time, including poorly designed software applications, malware, viruses, fragmented memory, background processes, etc. However, due to the complexity of modern mobile devices, it is increasingly difficult for users, operating systems, and/or application programs (e.g., anti-virus software, etc.) to accurately and efficiently identify the sources of such problems and/or to provide adequate remedies to identified problems. As a result, mobile device users currently have few remedies for preventing the degradation in performance and power utilization levels of a mobile device over time, or for restoring an aging mobile device to its original performance and power utilization levels.

The various aspects provide network servers, mobile devices, systems, and methods for efficiently identifying, classifying, modeling, preventing, and/or correcting the conditions and/or mobile device behaviors that often degrade a mobile device's performance and/or power utilization levels over time. By storing information on such conditions and corrective actions in a central database, such as the "cloud" and enabling mobile devices to access and use the information stored in this database, the various aspects enable mobile devices to react to performance-limiting and undesirable operating conditions much faster and with lower power consumption than if all such analyses accomplished independently within each mobile device.

As mentioned above, mobile devices are resource constrained systems that have relatively limited processing, memory, and energy resources. As also mentioned above, modern mobile devices are complex systems, and there may be thousands of features/factors and billions of datapoints that require analysis to properly identify the cause or source of a mobile device's degradation. Due to these constraints, it is often not feasible to monitor/observe all the various processes, behaviors, or factors (or combinations thereof) that may degrade performance and/or power utilization levels of the complex yet resource-constrained systems of modern mobile devices.

To provide better performance in view of these facts, the various aspects include mobile devices and network servers configured to work in conjunction with a cloud service or network (e.g., anti-virus partner, security partner, etc.) to intelligently and efficiently identify factors that may contribute to the degradation in performance and power utilization levels of mobile devices over time. Various aspects may identify performance-degrading factors on the mobile device without consuming an excessive amount of processing, memory, or energy resources of the mobile device.

In an aspect, an observer process, daemon, module, or sub-system (herein collectively referred to as a "module") of the mobile device may instrument or coordinate various application programming interfaces (APIs) at various levels of the mobile device system, and collect behavior information from the instrumented APIs. In an aspect, the mobile device may also include an analyzer module, and the analyzer module may generate one or more classifier modules and/or a classifier module that includes one or more classifiers. The observer module may communicate (e.g., via a memory write operation, function call, etc.) the collected behavior information to the classifier module and/or the analyzer module (e.g., via a memory write operation, etc.) of the mobile device, which may analyze and/or classify the collected behavior information, generate behavior vectors, generate spatial and/or temporal correlations based on the behavior vector and information collected from various other mobile device sub-systems, and determine whether a particular mobile device behavior, software application, or process is benign, suspicious, or malicious/performance-degrading.

In an aspect, the analyzer module and/or classifier module may be included in, or as part of, the analyzer module of the mobile device. In an aspect, one or more classifiers may be generated as a function of a training dataset, which may include thousands of features and billions of entries. In an aspect, one or more classifiers may be generated from a reduced training dataset that includes only the features/entries that are most relevant for determining whether a particular mobile device behavior, software application, or process is benign, suspicious, or malicious/performance-degrading.

In an aspect, the analyzer module and/or classifier module of the mobile device may be configured to perform real-time analysis operations, which may include applying data, algorithms, and/or behavior models to behavior information collected by the observer module to determine whether a mobile device behavior is benign, suspicious, or malicious/performance-degrading. The classifier module may determine that a mobile device behavior is suspicious when the classifier does not have sufficient information to classify or conclusively determine that the behavior is either benign or malicious.

In an aspect, the classifier module of the mobile device may be configured to communicate the results of its real-time analysis operations to the observer module when the classifier module determines that a device behavior is suspicious. The observer module may adjust the granularity of its observations (i.e., the level of detail at which mobile device behaviors are observed) and/or change the behaviors that are observed based on information received from the classifier module (e.g., results of the real-time analysis operations), generate or collect new or additional behavior information, and send the new/additional information to the classifier module for further analysis/classification.

Such feedback communications between the observer and classifier modules (e.g., classifier module sending the results of its real-time analysis operations to the observer module, and the observer module sending updated behavior information to the classifier module) may enable a mobile device processor to recursively increase the granularity of the observations (i.e., make finer or more detailed observations) or change the features/behaviors that are observed until a source of a suspicious or performance-degrading mobile device behavior is identified, until a processing or battery consumption threshold is reached, or until the mobile device processor determines that the source of the suspicious or performance-degrading mobile device behavior cannot be identified from further increases in observation granularity. Such feedback communications also enable the mobile device processor to adjust or modify the data/behavior models locally in the mobile device without consuming an excessive amount of the mobile device's processing, memory, or energy resources.

In various aspects, the mobile device may be configured to communicate with a network server that includes an offline classifier and/or a real-time online classifier. The offline classifier may generate robust data/behavior models based on information received from a cloud service/network. The real-time online classifier may generate lean data/behavior models based on analyzing the larger and more complicated behavior models generated from information received from the cloud service/network. Both the online and offline classifiers may generate data/behavior models that include a reduced subset of information made available by the cloud service/network for a particular mobile device. In an aspect, generating the lean data/behavior models may include generating one or more reduced feature models (RFMs).

The network server may send the generated lean data/behavior models to the mobile device. The mobile device may receive and implement, apply, or use lean data/behavior models to identify suspicious or performance-degrading mobile device behaviors, software applications, processes, etc. Since the lean data/behavior models include a reduced subset of the relevant information made available by the cloud service/network, the mobile device may use the lean data/behavior models to determine whether a mobile device behavior is malicious/performance-degrading or benign without consuming an excessive amount of processing, memory, or energy resources of the mobile device. The mobile device may then correct or prevent the identified performance-degrading mobile device behaviors from degrading the performance and power utilization levels of the mobile device.

In various aspects, the network server may be configured to generate or update the lean data/behavior models by performing, executing, and/or applying machine learning and/or context modeling techniques to behavior information and/or results of behavior analyses provided by many mobile devices. Thus, the network server may receive a large number of reports from many mobile devices and analyze, consolidate or otherwise turn such crowd-sourced information into useable information, particularly a lean data set or focused behavior models that can be used or accessed by all mobile devices. The network server may continuously reevaluate existing lean data/behavior models as new behavior/analysis reports are received from mobile devices, and/or generate new or updated lean data/behavior models based on historical information (e.g., collected from prior executions, previous applications of behavior models, etc.), new information, machine learning, context modeling, and detected changes in the available information, mobile device states, environmental conditions, network conditions, mobile device performance, battery consumption levels, etc.

In an aspect, the network server may be configured to generate the lean data/behavior models to include an initial feature set (e.g., an initial reduced feature model) and one or more subsequent feature sets (e.g., subsequent reduced feature models). The initial feature set may include information determined to have a highest probably of enabling the classifier module of the mobile devices to conclusively determine whether a particular mobile device behavior, software application, or process is malicious/performance-degrading or benign. Each subsequent feature set may include information determined to have the next highest probably of conclusively determining that the mobile device behavior, software application, or process is malicious/performance-degrading or benign. Each subsequent feature set may include a larger dataset than its preceding feature set, and thus the performance and power consumption costs associated with applying the data/behavior models may increase progressively for each subsequent feature set.

In an aspect, the classifier module of the mobile device may include or implement progressive behavior models (or classifiers) that enable the mobile device processor to evaluate the mobile device behaviors in stages. For example, the classifier module may be configured to first apply a lean data/behavior model that includes the initial feature set, then model that include progressively larger feature sets until the classifier module determines that a mobile device behavior is benign or malicious/performance-degrading. The classifier module may then send the results of its operations and/or success rates associated with the application of each model to the network server. The network server may use such results to update the lean data/behavior models (e.g., the features sets included in each model, etc.), thereby refining the data and/or models based on the results/success rates of all reporting mobile devices. The network server may then make the updated lean data/behavior models available to mobile devices so they have access to the lean data/behavior models. In this manner, mobile devices can instantly benefit from the behaviors and conclusions of other mobile devices.

In an aspect, the network server may be configured to continuously update the online and offline classifiers, model generators, and/or cloud model. The network server may be configured to intelligently determine when the changes are substantial enough to warrant generating new models and when the changes may be ignored. For example, the network server may receive updates from many different mobile devices, perform machine learning operations to generate a first family of classifiers, determine whether there are enough changes to the generated first family of classifiers to warrant generating new models, determine which features in the generated first family of classifiers are the best features (e.g., via a feature selection algorithm) when it is determined that there are enough changes to the first family of classifiers, generate a second family of classifiers based on the best features, determine whether there are enough changes to the generated second family of classifiers, and generate/update mobile device classifier data/behavior models when it is determined that there are enough changes to the second family of classifiers.

Various aspects may include client-cloud systems and network architectures that include a deep classifier in the cloud and a lean classifier for on-line real-time power efficient implementation on the mobile device. In an aspect, a lean classifier may be an order of magnitude or more less (e.g., in terms of number of factors evaluated, processing time, etc.) than a deep classifier. For example, an aspect client-cloud system may include a deep classifier that evaluates five-hundred factors and a lean classifier that evaluates fifty factors. Similarly, an aspect client-cloud system may include a deep classifier that evaluates five-hundred billion data-points and a lean classifier that evaluates fifty billion data-points.

Each execution/application of a classifier or a data/behavior model to collected behavior information may provide information suitable for improving existing and future classifiers and data/behavior models. For example, if a result of applying a data/behavior model to behavior information collected on the mobile device identifies network usage in excess of 1 Mbps as being malicious, and the mobile device determines that a monitored process is consuming 1.5 Mbps of network resources, the system may label the process malicious and strengthen the applied model (e.g., increase the weight given to the accuracy of the model, etc.) without changing the actual model. As another example, if the mobile device determines that an application consuming .5 Mbps of network resources is malicious (due to other attributes), the system may lower the threshold to 0.9 Mbps to modify the original cloud model, the lean model, or both.

Various aspects may include mobile devices configured to apply progressive models of classifiers that enable staged evaluation of mobile device behavior.

Various aspects may include systems suitable for updating a global model in cloud based on new observations, and updating a mobile device model when there are enough/sufficient changes.

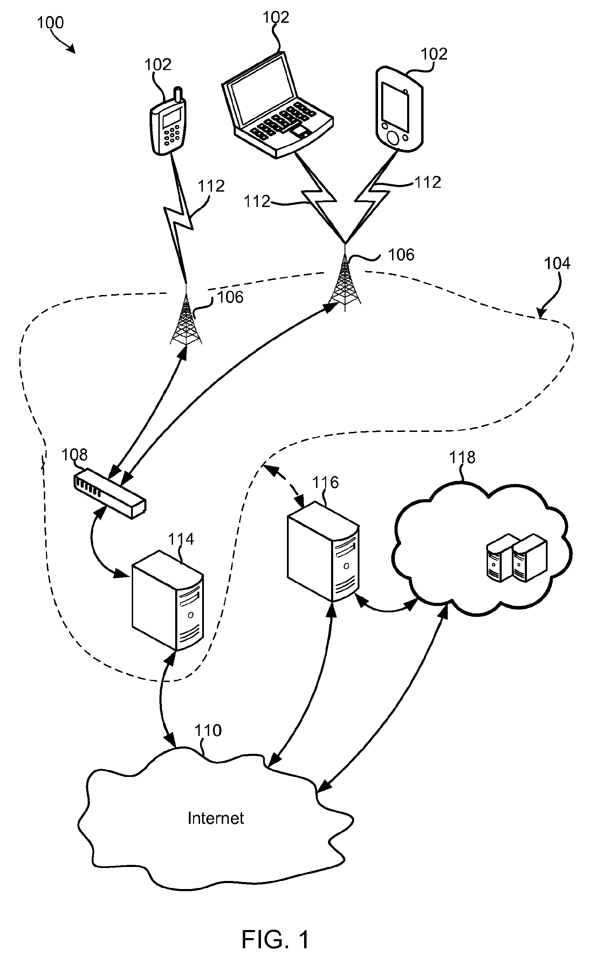

The various aspects may be implemented within a variety of communication systems, such as the example communication system 100 illustrated in FIG. 1. A typical cell telephone network 104 includes a plurality of cell base stations 106 coupled to a network operations center 108, which operates to connect voice calls and data between mobile devices 102 (e.g., cell phones, laptops, tablets, etc.) and other network destinations, such as via telephone land lines (e.g., a POTS network, not shown) and the Internet 110. Communications between the mobile devices 102 and the telephone network 104 may be accomplished via two-way wireless communication links 112, such as 4G, 3G, CDMA, TDMA, LTE and/or other cell telephone communication technologies. The telephone network 104 may also include one or more servers 114 coupled to or within the network operations center 108 that provide a connection to the Internet 110.

The communication system 100 may further include network servers 116 connected to the telephone network 104 and to the Internet 110. The connection between the network server 116 and the telephone network 104 may be through the Internet 110 or through a private network (as illustrated by the dashed arrows). The network server 116 may also be implemented as a server within the network infrastructure of a cloud service provider network 118. Communication between the network server 116 and the mobile devices 102 may be achieved through the telephone network 104, the internet 110, private network (not illustrated), or any combination thereof.

The network server 116 may send lean data/behavior models to the mobile device 102, which may receive and use lean data/behavior models to identify suspicious or performance-degrading mobile device behaviors, software applications, processes, etc. The network server 116 may also send classification and modeling information to the mobile devices 102 to replace, update, create and/or maintain mobile device data/behavior models.

The mobile device 102 may collect behavioral, state, classification, modeling, success rate, and/or statistical information in the mobile device 102, and send the collected information to the network server 116 (e.g., via the telephone network 104) for analysis. The network server 116 may use information received from the mobile device 102 to update or refine the lean data/behavior models or the classification/ modeling information to include a further targeted and/or reduced subset of features.

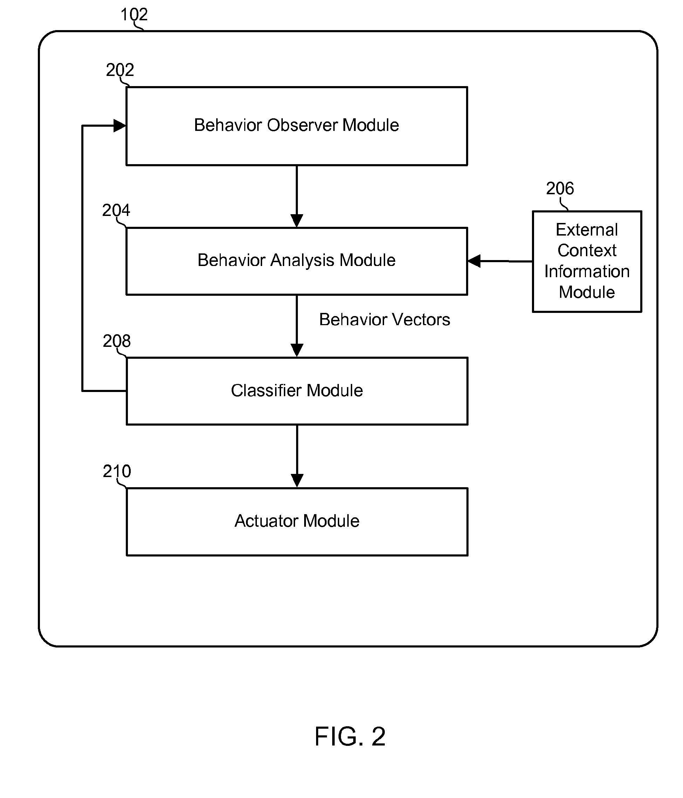

FIG. 2 illustrates example logical components and information flows in an aspect mobile device 102 configured to determine whether a particular mobile device behavior, software application, or process is malicious/performance-degrading, suspicious, or benign. In the example illustrated in FIG. 2, the mobile device 102 includes a behavior observer module 202, a behavior analyzer module 204, an external context information module 206, a classifier module 208, and an actuator module 210. In an aspect, the classifier module 208 may be implemented as part of the behavior analyzer module 204. In an aspect, the behavior analyzer module 204 may be configured to generate one or more classifier modules 208, each of which may include one or more classifiers.

Each of the modules 202-210 may be implemented in software, hardware, or any combination thereof. In various aspects, the modules 202-210 may be implemented within parts of the operating system (e.g., within the kernel, in the kernel space, in the user space, etc.), within separate programs or applications, in specialized hardware buffers or processors, or any combination thereof. In an aspect, one or more of the modules 202-210 may be implemented as software instructions executing on one or more processors of the mobile device 102.

The behavior observer module 202 may be configured to instrument or coordinate application programming interfaces (APIs) at various levels/modules of the mobile device, and monitor/observe mobile device operations and events (e.g., system events, state changes, etc.) at the various levels/modules via the instrumented APIs, collect information pertaining to the observed operations/events, intelligently filter the collected information, generate one or more observations based on the filtered information, and store the generated observations in a memory (e.g., in a log file, etc.) and/or send (e.g., via memory writes, function calls, etc.) the generated observations to the behavior analyzer module 204.

The behavior observer module 202 may monitor/observe mobile device operations and events by collecting information pertaining to library API calls in an application framework or run-time libraries, system call APIs, file-system and networking sub-system operations, device (including sensor devices) state changes, and other similar events. The behavior observer module 202 may also monitor file system activity, which may include searching for filenames, categories of file accesses (personal info or normal data files), creating or deleting files (e.g., type exe, zip, etc.), file read/write/seek operations, changing file permissions, etc.

The behavior observer module 202 may also monitor data network activity, which may include types of connections, protocols, port numbers, server/client that the device is connected to, the number of connections, volume or frequency of communications, etc. The behavior observer module 202 may monitor phone network activity, which may include monitoring the type and number of calls or messages (e.g., SMS, etc.) sent out, received, or intercepted (e.g., the number of premium calls placed).

The behavior observer module 202 may also monitor the system resource usage, which may include monitoring the number of forks, memory access operations, number of files open, etc. The behavior observer module 202 may monitor the state of the mobile device, which may include monitoring various factors, such as whether the display is on or off, whether the device is locked or unlocked, the amount of battery remaining, the state of the camera, etc. The behavior observer module 202 may also monitor inter-process communications (IPC) by, for example, monitoring intents to crucial services (browser, contracts provider, etc.), the number or degree of inter-process communications, pop-up windows, etc.

The behavior observer module 202 may also monitor/observe driver statistics and/or the status of one or more hardware components, which may include cameras, sensors, electronic displays, WiFi communication components, data controllers, memory controllers, system controllers, access ports, timers, peripheral devices, wireless communication components, external memory chips, voltage regulators, oscillators, phase-locked loops, peripheral bridges, and other similar components used to support the processors and clients running on the mobile computing device.

The behavior observer module 202 may also monitor/observe one or more hardware counters that denote the state or status of the mobile computing device and/or mobile device sub-systems. A hardware counter may include a special-purpose register of the processors/cores that is configured to store a count or state of hardware-related activities or events occurring in the mobile computing device.

The behavior observer module 202 may also monitor/observe actions or operations of software applications, software downloads from an application download server (e.g., Apple® App Store server), mobile device information used by software applications, call information, text messaging information (e.g., SendSMS, BlockSMS, ReadSMS, ect.), media messaging information (e.g., ReceiveMMS), user account information, location information, camera information, accelerometer information, browser information, content of browser-based communications, content of voice-based communications, short range radio communications (e.g., Bluetooth, WiFi, etc.), content of text-based communications, content of recorded audio files, phonebook or contact information, contacts lists, etc.

The behavior observer module 202 may monitor/observe transmissions or communications of the mobile device, including communications that include voicemail (VoiceMailComm), device identifiers (DeviceIDComm), user account information (UserAccountComm), calendar information (CalendarComm ), location information (LocationComm), recorded audio information (RecordAudioComm), accelerometer information (AccelerometerComm), etc.

The behavior observer module 202 may monitor/observe usage of and updates/changes to compass information, mobile device settings, battery life, gyroscope information, pressure sensors, magnet sensors, screen activity, etc. The behavior observer module 202 may monitor/observe notifications communicated to and from a software application (AppNotifications), application updates, etc. The behavior observer module 202 may monitor/observe conditions or events pertaining to a first software application requesting the downloading and/or install of a second software application. The behavior observer module 202 may monitor/observe conditions or events pertaining to user verification, such as the entry of a password, etc.

The behavior observer module 202 may also monitor/observe conditions or events at multiple levels of the mobile device, including the application level, radio level, and sensor level. Application level observations may include observing the user via facial recognition software, observing social streams, observing notes entered by the user, observing events pertaining to the use of PassBook /Google Wallet /Paypal, etc. Application level observations may also include observing events relating to the use of virtual private networks (VPNs) and events pertaining to synchronization, voice searches, voice control (e.g., lock/unlock a phone by saying one word), language translators, the offloading of data for computations, video streaming, camera usage without user activity, microphone usage without user activity, etc.

Radio level observations may include determining the presence, existence or amount of any or more of: user interaction with the mobile device before establishing radio communication links or transmitting information, dual/multiple SIM cards, Internet radio, mobile phone tethering, offloading data for computations, device state communications, the use as a game controller or home controller, vehicle communications, mobile device synchronization, etc. Radio level observations may also include monitoring the use of radios (WiFi, WiMax, Bluetooth, etc.) for positioning, peer-to-peer (p2p) communications, synchronization, vehicle to vehicle communications, and/or machine-to-machine (m2m). Radio level observations may further include monitoring network traffic usage, statistics, or profiles.

Sensor level observations may include monitoring a magnet sensor or other sensor to determine the usage and/or external environment of the mobile device. For example, the mobile device processor may be configured to determine whether the phone is in a holster (e.g., via a magnet sensor configured to sense a magnet within the holster) or in the user's pocket (e.g., via the amount of light detected by a camera or light sensor). Detecting that the mobile device is in a holster may be relevant to recognizing suspicious behaviors, for example, because activities and functions related to active usage by a user (e.g., taking photographs or videos, sending messages, conducting a voice call, recording sounds, etc.) occurring while the mobile device is holstered could be signs of nefarious processes executing on the device (e.g., to track or spy on the user).

Other examples of sensor level observations related to usage or external environments may include, detecting near-field communications (NFC), collecting information from a credit card scanner, barcode scanner, or mobile tag reader, detecting the presence of a USB power charging source, detecting that a keyboard or auxiliary device has been coupled to the mobile device, detecting that the mobile device has been coupled to a computing device (e.g., via USB, etc.), determining whether an LED, flash, flashlight, or light source has been modified or disabled (e.g., maliciously disabling an emergency signaling app, etc.), detecting that a speaker or microphone has been turned on or powered, detecting a charging or power event, detecting that the mobile device is being used as a game controller, etc. Sensor level observations may also include collecting information from medical or healthcare sensors or from scanning the user's body, collecting information from an external sensor plugged into the USB/audio jack, collecting information from a tactile or haptic sensor (e.g., via a vibrator interface, etc.), collecting information pertaining to the thermal state of the mobile device, etc.

To reduce the number of factors monitored to a manageable level, in an aspect, the behavior observer module 202 may perform coarse observations by monitoring/observing an initial set of behaviors or factors that are a small subset of all factors that could contribute to the mobile device's degradation. In an aspect, the behavior observer module 202 may receive the initial set of behaviors and/or factors from a network server 116 and/or a component in a cloud service or network 118. In an aspect, the initial set of behaviors/factors may be specified in data/behavior models received from the network server 116 or cloud service/network 118. In an aspect, the initial set of behaviors/factors may be specified in a reduced feature model (RFMs).

The behavior analyzer module 204 and/or classifier module 208 may receive the observations from the behavior observer module 202, compare the received information (i.e., observations) with contextual information received from the external context information module 206, and identify subsystems, processes, and/or applications associated with the received observations that are contributing to (or are likely to contribute to) the device's degradation over time, or which may otherwise cause problems on the device.

In an aspect, the behavior analyzer module 204 and/or classifier module 208 may include intelligence for utilizing a limited set of information (i.e., coarse observations) to identify behaviors, processes, or programs that are contributing to (or are likely to contribute to) the device's degradation over time, or which may otherwise cause problems on the device. For example, the behavior analyzer module 204 may be configured to analyze information (e.g., in the form of observations) collected from various modules (e.g., the behavior observer module 202, external context information module 206, etc.), learn the normal operational behaviors of the mobile device, and generate one or more behavior vectors based the results of the comparisons. The behavior analyzer module 204 may send the generated behavior vectors to the classifier module 208 for further analysis.

The classifier module 208 may receive the behavior vectors and compare them to one or more behavior modules to determine whether a particular mobile device behavior, software application, or process is performance-degrading/malicious, benign, or suspicious.

When the classifier module 208 determines that a behavior, software application, or process is malicious or performance-degrading, the classifier module 208 may notify the actuator module 210, which may perform various actions or operations to correct mobile device behaviors determined to be malicious or performance-degrading and/or perform operations to heal, cure, isolate, or otherwise fix the identified problem.

When the classifier module 208 determines that a behavior, software application, or process is suspicious, the classifier module 208 may notify the behavior observer module 202, which may adjust the adjust the granularity of its observations (i.e., the level of detail at which mobile device behaviors are observed) and/or change the behaviors that are observed based on information received from the classifier module 208 (e.g., results of the real-time analysis operations), generate or collect new or additional behavior information, and send the new/additional information to the behavior analyzer module 204 and/or classifier module 208 for further analysis/classification. Such feedback communications between the behavior observer module 202 and the classifier module 208 enable the mobile device 102 to recursively increase the granularity of the observations (i.e., make finer or more detailed observations) or change the features/behaviors that are observed until a source of a suspicious or performance-degrading mobile device behavior is identified, until a processing or batter consumption threshold is reached, or until the mobile device processor determines that the source of the suspicious or performance-degrading mobile device behavior cannot be identified from further increases in observation granularity. Such feedback communication also enable the mobile device 102 to adjust or modify the data/behavior models locally in the mobile device without consuming an excessive amount of the mobile device's processing, memory, or energy resources.

In an aspect, the behavior observer module 202 and the behavior analyzer module 204 may provide, either individually or collectively, real-time behavior analysis of the computing system's behaviors to identify suspicious behavior from limited and coarse observations, to dynamically determine behaviors to observe in greater detail, and to dynamically determine the level of detail required for the observations. In this manner, the behavior observer module 202 enables the mobile device 102 to efficiently identify and prevent problems from occurring on mobile devices without requiring a large amount of processor, memory, or battery resources on the device.

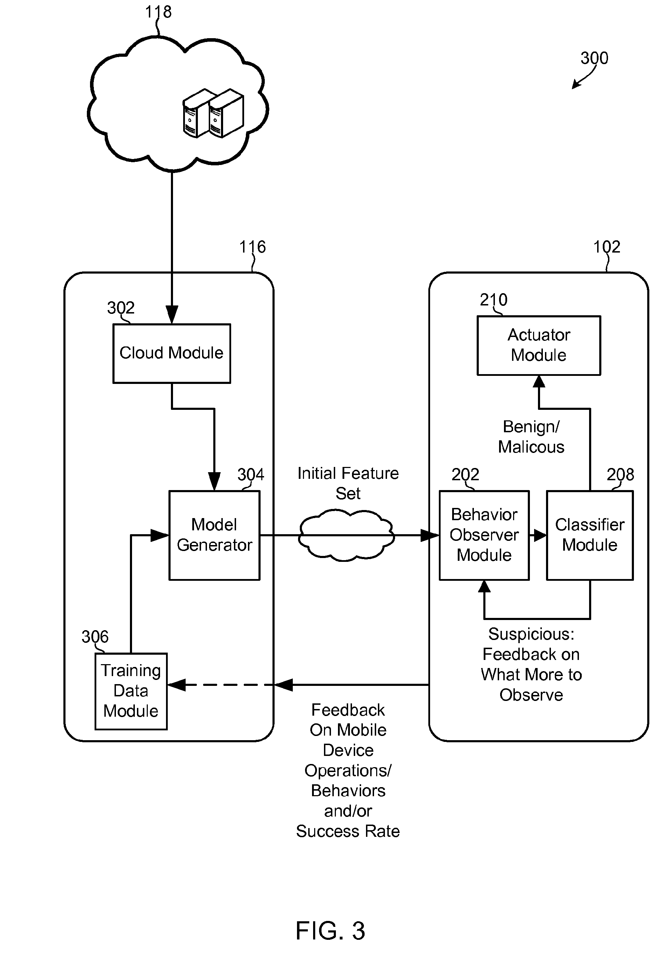

FIG. 3 illustrates example components and information flows in an aspect system 300 that includes a network server 116 configured to work in conjunction with a cloud service/network 118 to intelligently and efficiently identify actively malicious or poorly written software applications and/or suspicious or performance-degrading mobile device behaviors on the mobile device 102 without consuming an excessive amount of processing, memory, or energy resources of the mobile device. In the example illustrated in FIG. 3, the network server 116 includes a cloud module 302, a model generator 304, and a training data module 306, and the mobile device 102 includes an behavior observer module 202, a classifier module 208, and an actuator module 210. In an aspect, the classifier module 208 may be included in, or as part of, the behavior analyzer module 204 (illustrated in FIG. 2). In an aspect, the model generator 304 may be a real-time online classifier.

The cloud module 302 may be configured to receive a large amount of information from a cloud service/network 118 and generate a full or robust data/behavior model that includes all or most of the features, data points, and/or factors that could contribute to the mobile device's degradation over time.

The model generator 304 may generate lean data/behavior models based on full model generated in the cloud module 302. In an aspect, generating the lean data/behavior models may include generating one or more reduced feature models (RFMs) that include a subset of the features and data points included in the full model generated by the cloud module 302. In an aspect, the model generator 304 may generate a lean data/behavior model that include an initial feature set (e.g., an initial reduced feature model) that includes information determined to have a highest probably of enabling the classifier module 208 to conclusively determine whether a particular mobile device behavior malicious/performance-degrading or benign. The model generator 304 may send the generated lean models to the behavior observer module 202.

The behavior observer module 202 may monitor/observe mobile device behaviors based on the received model, generate observations, and send the observations to the classifier module 208. The classifier module 208 may perform real-time analysis operations, which may include applying data/behavior models to behavior information collected by the behavior observer module 202 to determine whether a mobile device behavior is benign, suspicious, or malicious/performance-degrading. The classifier module 208 may determine that a mobile device behavior is suspicious when it does not have sufficient information to classify or conclusively determine that the behavior is either benign or malicious.

The classifier module 208 may be configured to communicate the results of its real-time analysis operations to the behavior observer module 202 when the classifier module 208 determines that a device behavior is suspicious. The behavior observer module 202 may adjust the granularity of its observations (i.e., the level of detail at which mobile device behaviors are observed) and/or change the behaviors that are observed based on information received from the classifier module 208 (e.g., based on the results of the real-time analysis operations), generate or collect new or additional behavior information, and send the new/additional information to the classifier module for further analysis/classification (e.g., in the form of new models). In this manner, the mobile device 102 may recursively increase the granularity of the observations (i.e., make finer or more detailed observations) or change the features/behaviors that are observed until a source of a suspicious or performance-degrading mobile device behavior is identified, until a processing or batter consumption threshold is reached, or until the mobile device processor determines that the source of the suspicious or performance-degrading mobile device behavior cannot be identified from further increases in observation granularity.

The mobile device 102 may the send the results of its operations and/or success rates associated with the application of models to the network server 116. The network server 116 may generate training data (e.g., via the training data module 306) based on the results/success rates for use by the model generator 304. The model generator may generate updated models, and send the updated models to the mobile device 102.

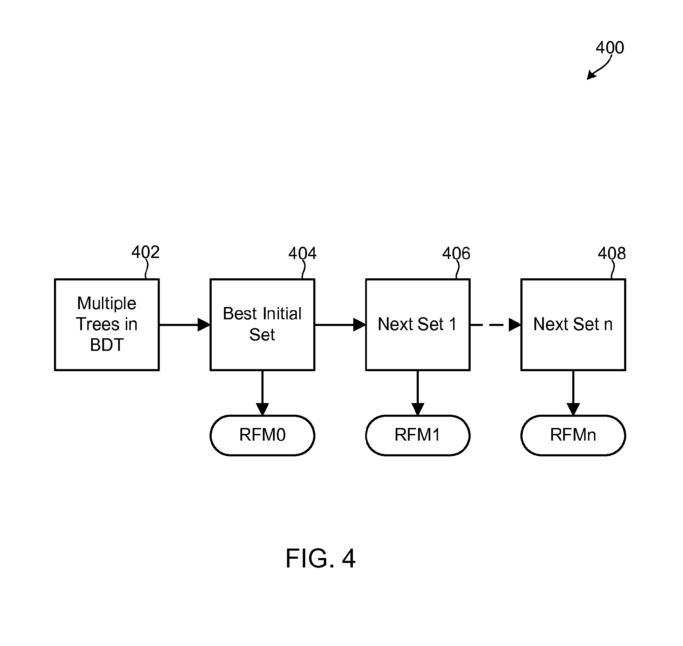

FIG. 4 illustrates an aspect method 400 of generating one or more reduced feature models (RFMs) to include a subset of the features and data points included in a full feature model (e.g., model generated in the cloud module 302, etc.). In various aspects, the method 400 may be performed in the cloud module 302, model generator 304, the classifier module 208, or any combination thereof. In block 402, a processor may perform a classification algorithm to build a decision tree (or other similar structures) from a large corpus of data (e.g., billons of datapoints, thousands of features, etc.) received from a cloud service/network 118. In an aspect, the classification algorithm may include a boosted decision tree (BDT) algorithm or any other similar classification or decision-making algorithms.

In block 404, the processor may generate an initial reduced feature set (e.g., RFM0) from the decision tree or structure. The initial reduced feature set (e.g., RFM0) may include information determined to have a highest probably of enabling the classifier module to conclusively determine whether a particular mobile device behavior is malicious or benign. In block 406, the processor may generate a subsequent reduced feature set (e.g., RFM1) from the decision tree or structure to include information determined to have the next highest probably of conclusively determining whether the mobile device behavior is malicious or benign. In block 408, the processor may generate additional subsequent feature sets (e.g., RFMn) from the decision tree or structure.

Each subsequent feature set (e.g., RFM1- RFMn) may include a larger dataset than its preceding feature set. For example, if the decision tree or structure identified a thousand (1000) relevant factors, the initial reduced feature set (e.g., RFMo) may include fifty (50) of the factors that are determined to have the highest probably of enabling the classifier module of the mobile device to conclusively determine whether a mobile device behavior is malicious or benign. The first subsequent reduced feature set (e.g., RFM1) may include the next hundred (100) factors and a subsequent reduced feature set (e.g., RFMn) may include the remaining eight-hundred and fifty (850) factors.

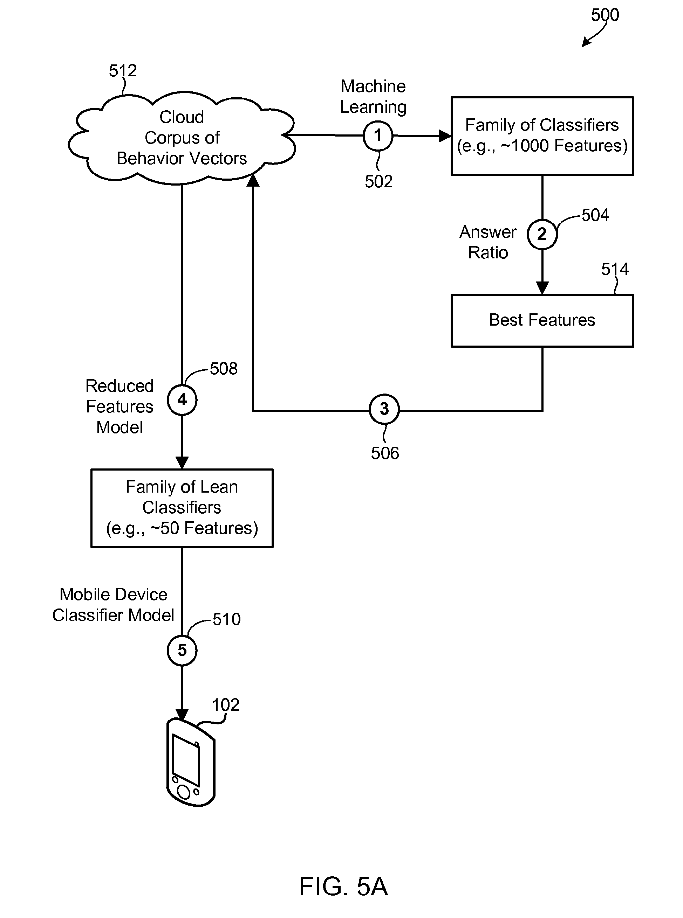

FIG. 5A illustrates an aspect system method 500 of building a lean mobile device classifier model based on one or more reduced feature models (RFMs). In operation 502, a network server processor may apply machine learning techniques to generate a family of classifier models that describe a cloud corpus of behavior vectors 512 (e.g., by generating a boosted decision tree, etc.). The cloud corpus of behavior vectors 512 may include a large body of behavior vectors (e.g., one billion behavior vectors) collected from many different mobile devices (e.g., 10 million mobile devices).

In operation 504, the network server processor may identify and group the features that are determined to have the highest probability of enabling the classifier/analyzer module of the mobile device to conclusively determine whether a mobile device behavior is malicious or benign. In operation 506, the network server processor may apply the identified best features 514 to the cloud corpus of behavior vectors 512. In operation 508, the network server processor may generate a new family of reduced feature modules that identify significantly fewer features relevant for enabling the classifier/analyzer module to conclusively determine whether a mobile device behavior is malicious or benign. In operation 510, the network server processor may send the reduced feature modules to the mobile device 102.

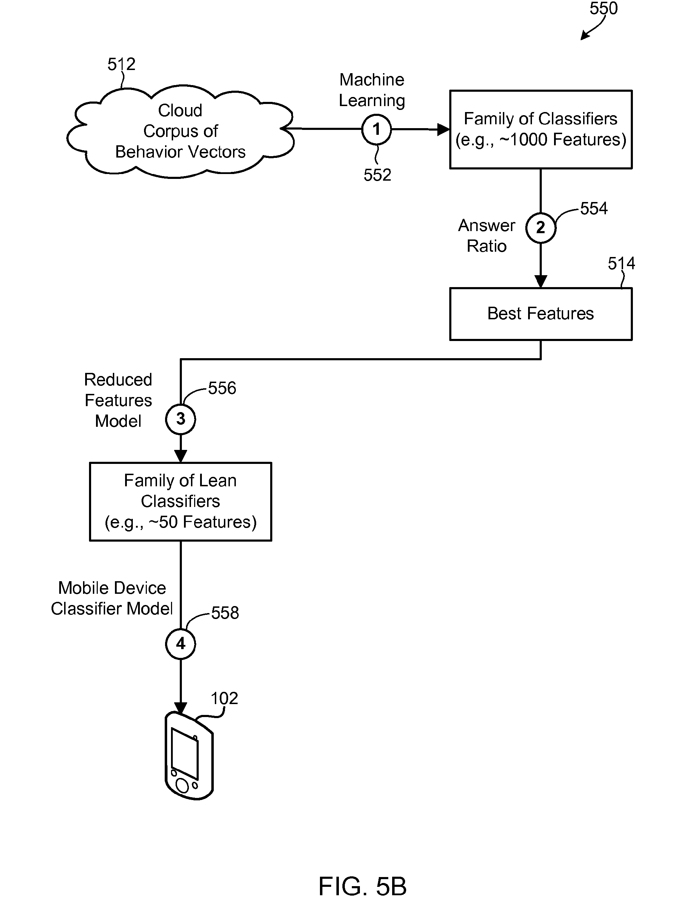

FIG. 5B illustrates another aspect system method 550 of building a lean mobile device classifier model based on one or more reduced feature models (RFMs). In operation 552, a network server processor may apply machine learning techniques to generate a family of classifier models that describe a cloud corpus of behavior vectors 512 (e.g., by generating a boosted decision tree, etc.). In operation 554, the network server processor may identify and group the features that are determined to have the highest probability of enabling the classifier/analyzer module of the mobile device to conclusively determine whether a mobile device behavior is malicious or benign. In operation 556, the network server processor may generate a new family of reduced feature modules that identify significantly fewer features relevant for enabling the classifier/analyzer module to conclusively determine whether a mobile device behavior is malicious or benign. In an aspect, the network server processor may generate the new family of reduced feature modules based on the identified best features 514. In operation 556, the network server processor may send the reduced feature modules to the mobile device 102.

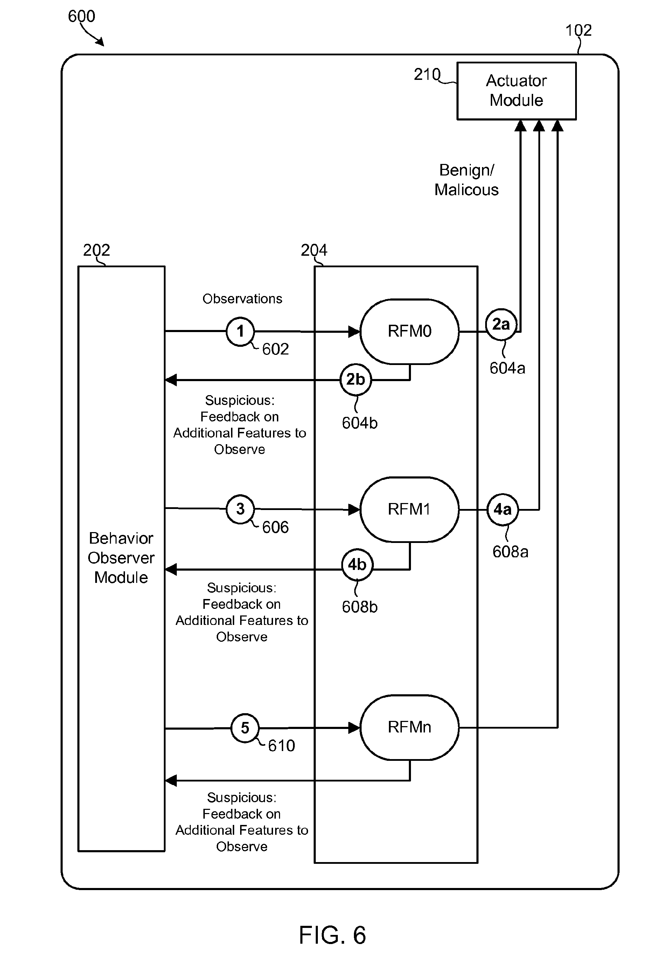

FIG. 6 illustrates logical components, information flows, in a mobile device 102 configured to perform an aspect progressive analysis method 600 of evaluating mobile device behaviors in stages. In the example illustrated in FIG. 6, the mobile device 102 includes a behavior analyzer module 204 that includes an initial reduced feature set (e.g., RFM0) module and a plurality of subsequent reduced feature set (e.g., RFM1- RFMn) modules, each of which may be a classifier module 208. In operation 602, the behavior observer module 202 may monitor/observe mobile device behaviors based on the received model, generate observations, and send the observations to the initial reduced feature set (e.g., RFM0) module.

The initial reduced feature set (e.g., RFM0) module may receive the observations and determine whether a particular mobile device behavior, software application, or process is performance-degrading/malicious, benign, or suspicious. When the initial reduced feature set (e.g., RFM0) module determines that a behavior, software application, or process is benign, malicious or performance-degrading, in operation 604a, the initial reduced feature set (e.g., RFM0) module may notify the actuator module 210, which may perform various actions or operations to correct mobile device behaviors determined to be malicious or performance-degrading and/or perform operations to heal, cure, isolate, or otherwise fix the identified problem.

When the initial reduced feature set (e.g., RFM0) module determines that a behavior, software application, or process is suspicious, in operation 604b, the initial reduced feature set (e.g., RFM0) module may send a notification message to the behavior observer module 202, which may adjust the adjust the granularity of its observations (i.e., the level of detail at which mobile device behaviors are observed) and/or change the behaviors that are observed based on information received from the initial reduced feature set (e.g., RFM0) module (e.g., results of real-time analysis operations ), and generate or collect new or additional behavior information. In operation 606, the behavior observer module 202 may send the new/additional information to the first subsequent reduced feature set (e.g., RFM1) module for further analysis/classification.

The first subsequent reduced feature set (e.g., RFM1) module may receive the additional information and determine whether a particular mobile device behavior, software application, or process is performance-degrading/malicious, benign, or suspicious. When the first subsequent reduced feature set (e.g., RFM1) module determines that a behavior, software application, or process is benign, malicious or performance-degrading, in operation 608a, the first subsequent reduced feature set (e.g., RFM1) module may notify the actuator module 210, which may perform various actions or operations to correct mobile device behaviors determined to be malicious or performance-degrading and/or perform operations to heal, cure, isolate, or otherwise fix the identified problem.

When the first subsequent reduced feature set (e.g., RFM1) module determines that a behavior, software application, or process is suspicious, in operation 608b, the first subsequent reduced feature set (e.g., RFM1) module may send a notification message to the behavior observer module 202, which may further adjust the adjust the granularity of its observations and/or change the behaviors that are observed based on information received from the first subsequent reduced feature set (e.g., RFM1) module, and generate or collect new or additional behavior information. In operation 610, the behavior observer module 202 may send the new/additional information to the another subsequent reduced feature set (e.g., RFMn) module for further analysis/classification. The operations 606-610 may be performed repeatedly until the behavior analyzer module 204 conclusively determines that the behavior, software application, or process is benign or malicious.

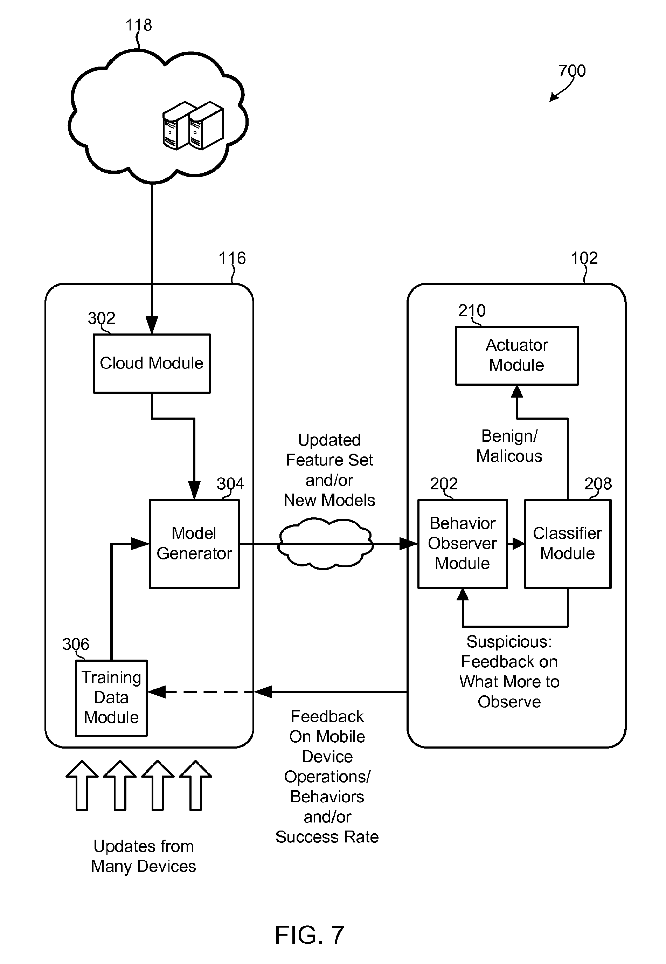

FIG. 7 illustrates example components and information flows in an aspect system 700 that includes a network server 116 configured to receive updated from a plurality of mobile devices.

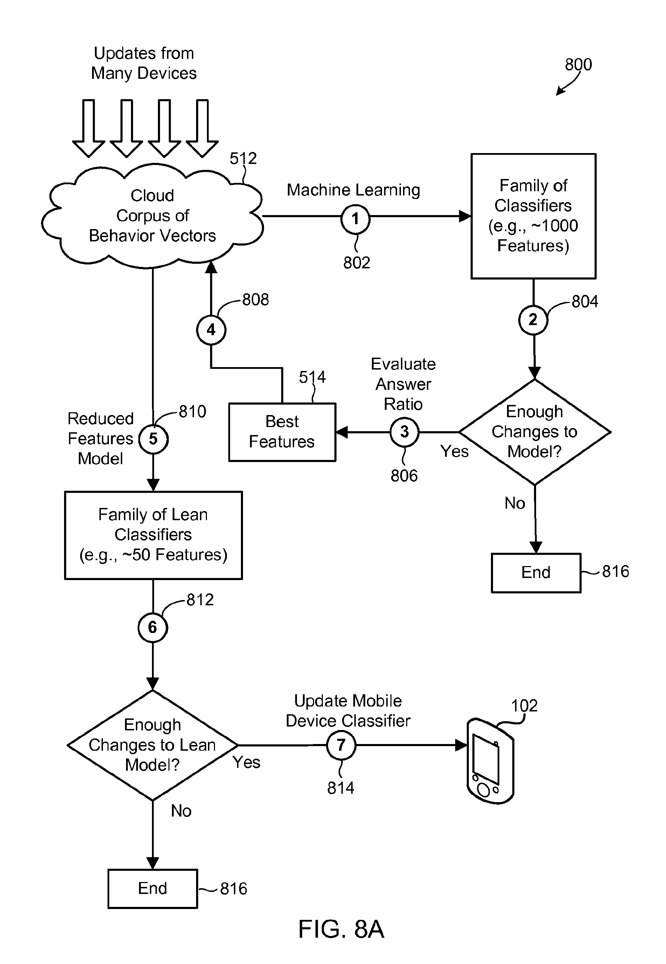

FIG. 8A illustrates an aspect server/system method 800 of building a lean mobile device classifier model from a cloud corpus of behavior vectors 512 that is continuously receiving updated information from a plurality of mobile devices. In operation 802, a server processor may apply machine learning techniques to generate an updated first family of classifier models that describe a cloud corpus of behavior vectors 512 (e.g., by generating a boosted division tree, etc.). In determination operation 804, the server processor may determine if the changes to the first family of classifier models are significant.

When it is determined that first family of classifier models are not significant (determination operation 804= "No"), in operation 816, the method 800 may end. When it is determined that first family of classifier models are significant (determination operation 804= "Yes"), in operation 806, the server processor may identify and group the features that are determined to have the highest probably of enabling the classifier/analyzer module of the mobile device to conclusively determine whether a mobile device behavior is malicious or benign.

In operation 808, the server processor may apply identified best features to the cloud corpus of behavior vectors 512. In operation 810, the server processor may generate a second family of classifiers that include reduced feature modules that identify significantly fewer features relevant for enabling the classifier/analyzer module to conclusively determine whether a mobile device behavior is malicious or benign. In determination operation 812, the server processor may determine whether the generated second family of classifiers includes reduced feature modules that are significantly different from the previous models to warrant generating an updated mobile device classifier. When it is determined that there are not enough changes in the second family of classifiers to warrant generating an updated mobile device classifier (determination operation 812= "No"), in operation 816, the method 800 may end. When it is determined that there are enough changes in the second family of classifiers to warrant generating an updated mobile device classifier (determination operation 812= "Yes"), in operation 814, the system may generate an updated mobile device classifier that includes one or more of the reduced feature modules and send the mobile device classifier to the mobile device 102.

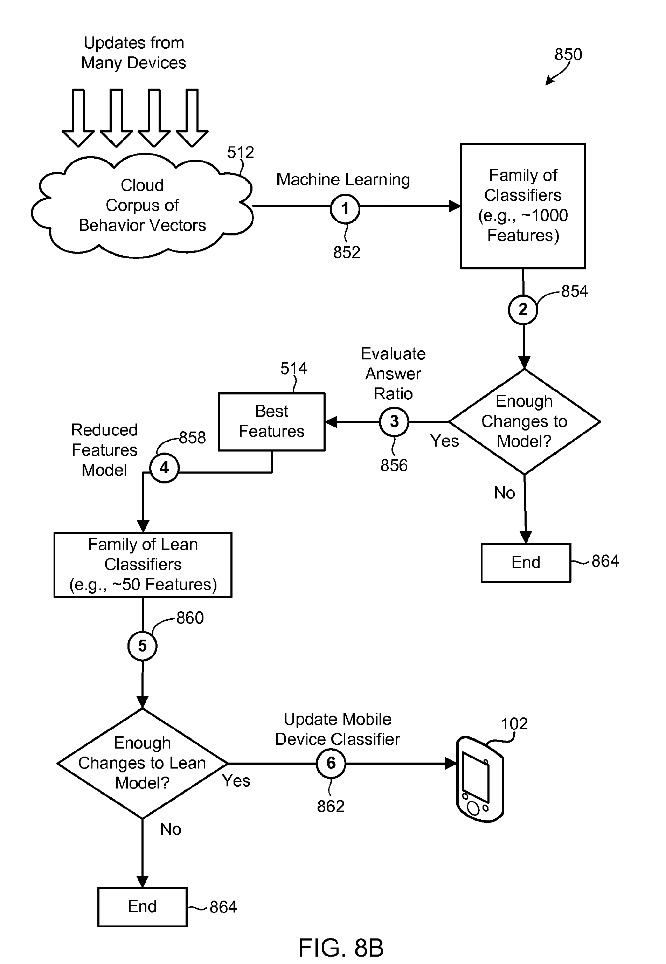

FIG. 8B illustrates another aspect server/system method 850 of building a lean mobile device classifier model from a cloud corpus of behavior vectors 512 that is continuously receiving updated information from a plurality of mobile devices. In operation 852, a server processor may apply machine learning techniques to generate an updated first family of classifier models that describe a cloud corpus of behavior vectors 512 (e.g., by generating a boosted division tree, etc.). In determination operation 854, the server processor may determine if the changes to the first family of classifier models are significant.

When it is determined that first family of classifier models are not significant (determination operation 854= "No"), in operation 864, the method 850 may end. When it is determined that first family of classifier models are significant (determination operation 854= "Yes"), in operation 856, the server processor may identify and group the features that are determined to have the highest probably of enabling the classifier/analyzer module of the mobile device to conclusively determine whether a mobile device behavior is malicious or benign. In operation 858, the server processor may generate a second family of classifiers that include reduced feature modules that identify significantly fewer features relevant for enabling the classifier/analyzer module to conclusively determine whether a mobile device behavior is malicious or benign. In determination operation 860, the server processor may determine whether the generated second family of classifiers includes reduced feature modules that are significantly different from the previous models to warrant generating an updated mobile device classifier.

When it is determined that there are not enough changes in the second family of classifiers to warrant generating an updated mobile device classifier (determination operation 860= "No"), in operation 864, the method 850 may end. When it is determined that there are enough changes in the second family of classifiers to warrant generating an updated mobile device classifier (determination operation 860= "Yes"), in operation 862, the system may generate an updated mobile device classifier that includes one or more of the reduced feature modules and send the mobile device classifier to the mobile device 102.

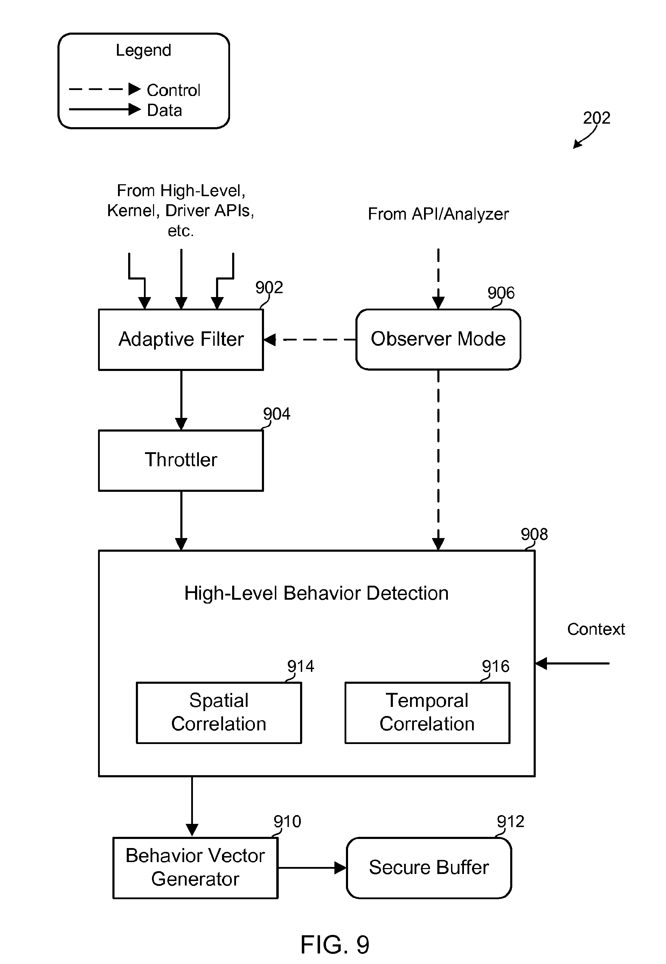

FIG. 9 illustrates example logical components and information flows in an behavior observer module 202 of a computing system configured to perform dynamic and adaptive observations in accordance with an aspect. The behavior observer module 202 may include an adaptive filter module 902, a throttle module 904, an observer mode module 906, a high-level behavior detection module 908, a behavior vector generator 910, and a secure buffer 912. The high-level behavior detection module 908 may include a spatial correlation module 914 and a temporal correlation module 916.

The observer mode module 906 may receive control information from various sources, which may include an analyzer unit (e.g., the behavior analyzer module 204 described above with reference to FIG. 2) and/or an application API. The observer mode module 906 may send control information pertaining to various observer modes to the adaptive filter module 902 and the high-level behavior detection module 908.

The adaptive filter module 902 may receive data/information from multiple sources, and intelligently filter the received information to generate a smaller subset of information selected from the received information. This filter may be adapted based on information or control received from the analyzer module, or a higher-level process communicating through an API. The filtered information may be sent to the throttle module 904, which may be responsible for controlling the amount of information flowing from the filter to ensure that the high-level behavior detection module 908 does not become flooded or overloaded with requests or information.

The high-level behavior detection module 908 may receive data/information from the throttle module 904, control information from the observer mode module 906, and context information from other components of the mobile device. The high-level behavior detection module 908 may use the received information to perform spatial and temporal correlations to detect or identify high level behaviors that may cause the device to perform at sub-optimal levels. The results of the spatial and temporal correlations may be sent to the behavior vector generator 910, which may receive the correlation information and generate a behavior vector that describes the behaviors of particular process, application, or sub-system. In an aspect, the behavior vector generator 910 may generate the behavior vector such that each high-level behavior of a particular process, application, or sub-system is an element of the behavior vector. In an aspect, the generated behavior vector may be stored in a secure buffer 912. Examples of high-level behavior detection may include detection of the existence of a particular event, the amount or frequency of another event, the relationship between multiple events, the order in which events occur, time differences between the occurrence of certain events, etc.

In the various aspects, the behavior observer module 202 may perform adaptive observations and control the observation granularity. That is, the behavior observer module 202 may dynamically identify the relevant behaviors that are to be observed, and dynamically determine the level of detail at which the identified behaviors are to be observed. In this manner, the behavior observer module 202 enables the system to monitor the behaviors of the mobile device at various levels (e.g., multiple coarse and fine levels). The behavior observer module 202 may enable the system to adapt to what is being observed. The behavior observer module 202 may enable the system to dynamically change the factors/behaviors being observed based on a focused subset of information, which may be obtained from a wide verity of sources.

As discussed above, the behavior observer module 202 may perform adaptive observation techniques and control the observation granularity based on information received from a variety of sources. For example, the high-level behavior detection module 908 may receive information from the throttle module 904, the observer mode module 906, and context information received from other components (e.g., sensors) of the mobile device. As an example, a high-level behavior detection module 908 performing temporal correlations might detect that a camera has been used and that the mobile device is attempting to upload the picture to a server. The high-level behavior detection module 908 may also perform spatial correlations to determine whether an application on the mobile device took the picture while the device was holstered and attached to the user's belt. The high-level behavior detection module 908 may determine whether this detected high-level behavior (e.g., usage of the camera while holstered) is a behavior that is acceptable or common, which may be achieved by comparing the current behavior with past behaviors of the mobile device and/or accessing information collected from a plurality of devices (e.g., information received from a crowd-sourcing server). Since taking pictures and uploading them to a server while holstered is an unusual behavior (as may be determined from observed normal behaviors in the context of being holstered), in this situation the high-level behavior detection module 908 may recognize this as a potentially threatening behavior and initiate an appropriate response (e.g., shutting off the camera, sounding an alarm, etc.).

In an aspect, the behavior observer module 202 may be implemented in multiple parts.

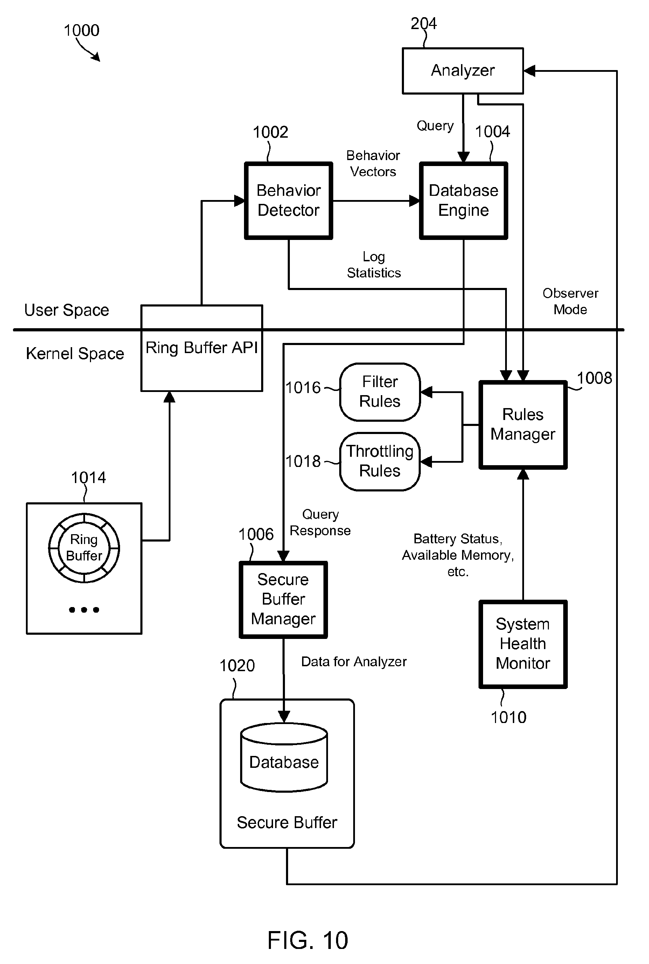

FIG. 10 illustrates logical components and information flows in a computing system 1000 implementing an aspect observer daemon. In the example illustrated in FIG. 10, the computing system 1000 includes a behavior detector 1002 module, a database engine 1004 module, and an behavior analyzer module 204 in the user space, and a ring buffer 1014, a filter rules 1016 module, a throttling rules 1018 module, and a secure buffer 1020 in the kernel space. The computing system 1000 may further include an observer daemon that includes the behavior detector 1002 and the database engine 1004 in the user space, and the secure buffer manager 1006, the rules manager 1008, and the system health monitor 1010 in the kernel space.

The various aspects may provide cross-layer observations on mobile devices encompassing webkit, SDK, NDK, kernel, drivers, and hardware in order to characterize system behavior. The behavior observations may be made in real time.

The observer module may perform adaptive observation techniques and control the observation granularity. As discussed above, there are a large number (i.e., thousands) of factors that could contribute to the mobile device's degradation, and it may not be feasible to monitor/observe all of the different factors that may contribute to the degradation of the device's performance. To overcome this, the various aspects dynamically identify the relevant behaviors that are to be observed, and dynamically determine the level of detail at which the identified behaviors are to be observed.

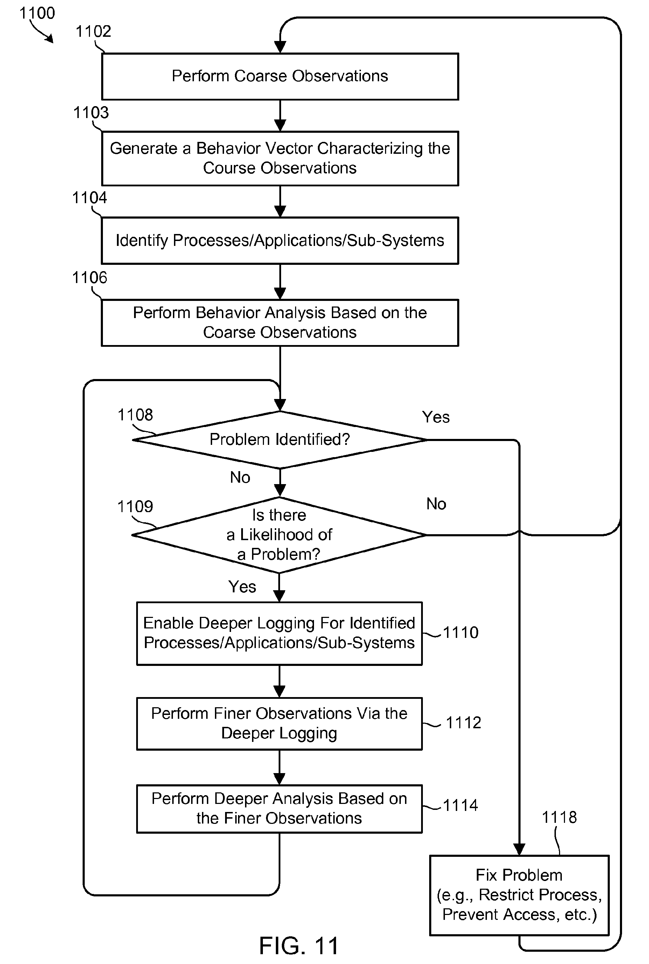

FIG. 11 illustrates an example method 1100 for performing dynamic and adaptive observations in accordance with an aspect. In block 1102, the mobile device processor may perform coarse observations by monitoring/observing a subset of large number factors/behaviors that could contribute to the mobile device's degradation. In block 1103, the mobile device processor may generate a behavior vector characterizing the coarse observations and/or the mobile device behavior based on the coarse observations. In block 1104, the mobile device processor may identify subsystems, processes, and/or applications associated with the coarse observations that may potentially contribute to the mobile device's degradation. This may be achieved, for example, by comparing information received from multiple sources with contextual information received from sensors of the mobile device. In block 1106, the mobile device processor may perform behavioral analysis operations based on the coarse observations. In aspect, as part of blocks 1103 and 1104, the mobile device processor may perform one or more of the operations discussed above with reference to FIGs. 2-8B.

In determination block 1108, the mobile device processor may determine whether suspicious behaviors or potential problems can be identified and corrected based on the results of the behavioral analysis. When the mobile device processor determines that the suspicious behaviors or potential problems can be identified and corrected based on the results of the behavioral analysis (i.e., determination block 1108 = "Yes"), in block 1118, the processor may initiate a process to correct the behavior and return to block 1102 to perform additional coarse observations.

When the mobile device processor determines that the suspicious behaviors or potential problems can not be identified and/or corrected based on the results of the behavioral analysis (i.e., determination block 1108 = "No"), in determination block 1109 the mobile device processor may determine whether there is a likelihood of a problem. In an aspect, the mobile device processor may determine that there is a likelihood of a problem by computing a probability of the mobile device encountering potential problems and/or engaging in suspicious behaviors, and determining whether the computed probability is greater than a predetermined threshold. When the mobile device processor determines that the computed probability is not greater than the predetermined threshold and/or there is not a likelihood that suspicious behaviors or potential problems exist and/or are detectable (i.e., determination block 1109 = "No"), the processor may return to block 1102 to perform additional coarse observations.

When the mobile device processor determines that there is a likelihood that suspicious behaviors or potential problems exist and/or are detectable (i.e., determination block 1109 = "Yes"), in block 1110, the mobile device processor may perform deeper logging/observations or final logging on the identified subsystems, processes or applications. In block 1112, the mobile device processor may perform deeper and more detailed observations on the identified subsystems, processes or applications. In block 1114, the mobile device processor may perform further and/or deeper behavioral analysis based on the deeper and more detailed observations. In determination block 1108, the mobile device processor may again determine whether the suspicious behaviors or potential problems can be identified and corrected based on the results of the deeper behavioral analysis. When the mobile device processor determines that the suspicious behaviors or potential problems can not be identified and corrected based on the results of the deeper behavioral analysis (i.e., determination block 1108 = "No"), the processor may repeat the operations in blocks 1110-1114 until the level of detail is fine enough to identify the problem or until it is determined that the problem cannot be identified with additional detail or that no problem exists.

When the mobile device processor determines that the suspicious behaviors or potential problems can be identified and corrected based on the results of the deeper behavioral analysis (i.e., determination block 1108 = "Yes"), in block 1118, the mobile device processor may perform operations to correct the problem/behavior, and the processor may return to block 1102 to perform additional operations.

In an aspect, as part of blocks 1102-1118 of method 1100, the mobile device processor may perform real-time behavior analysis of the system's behaviors to identify suspicious behavior from limited and coarse observations, to dynamically determine the behaviors to observe in greater detail, and to dynamically determine the precise level of detail required for the observations. This enables the mobile device processor to efficiently identify and prevent problems from occurring, without requiring the use of a large amount of processor, memory, or battery resources on the device.

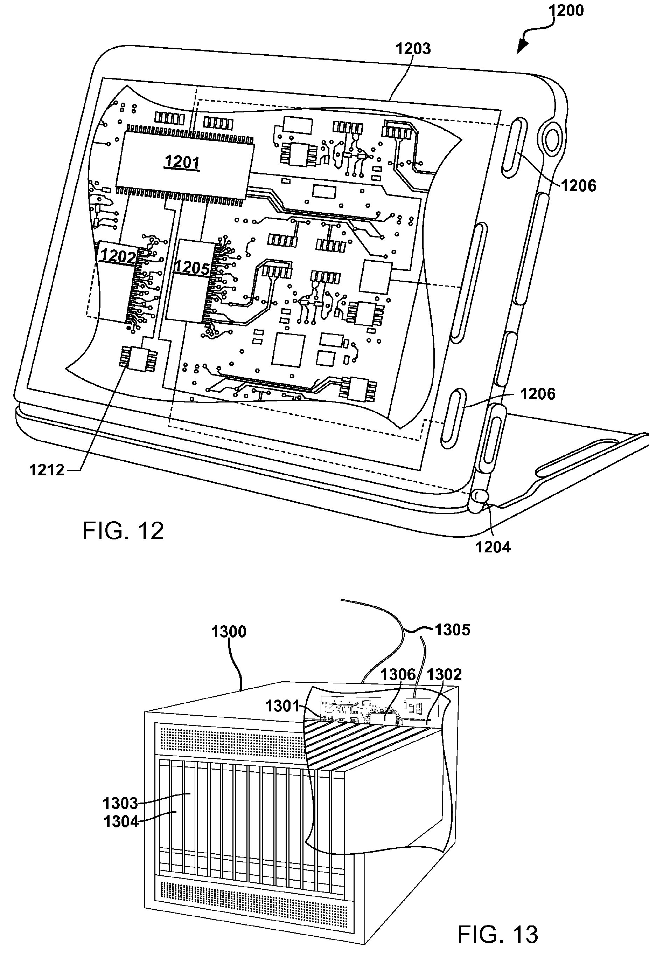

The various aspects may be implemented on a variety of mobile computing devices, an example of which is illustrated in FIG. 12 in the form of a smartphone. A smartphone 1202 may include a processor 1201 coupled to internal memory 1202, a display 1203, and to a speaker. Additionally, the smartphone 1202 may include an antenna 1204 for sending and receiving electromagnetic radiation that may be connected to a wireless data link and/or cellular telephone transceiver 1205 coupled to the processor 1201. Smartphone 1202 typically also include menu selection buttons or rocker switches 1206 for receiving user inputs.

A typical smartphone 1202 also includes a sound encoding/decoding (CODEC) circuit 1212, which digitizes sound received from a microphone into data packets suitable for wireless transmission and decodes received sound data packets to generate analog signals that are provided to the speaker to generate sound. Also, one or more of the processor 1201, wireless transceiver 1205 and CODEC 1212 may include a digital signal processor (DSP) circuit (not shown separately).

Portions of the aspect methods may be accomplished in a client-server architecture with some of the processing occurring in a server, such as maintaining databases of normal operational behaviors, which may be accessed by a mobile device processor while executing the aspect methods. Such aspects may be implemented on any of a variety of commercially available server devices, such as the server 1300 illustrated in FIG. 13. Such a server 1300 typically includes a processor 1301 coupled to volatile memory 1302 and a large capacity nonvolatile memory, such as a disk drive 1303. The server 1300 may also include a floppy disc drive, compact disc (CD) or DVD disc drive 13011 coupled to the processor 1301. The server 1300 may also include network access ports 1304 coupled to the processor 1301 for establishing data connections with a network 1305, such as a local area network coupled to other broadcast system computers and servers.

The processors 1201, 301 may be any programmable microprocessor, microcomputer or multiple processor chip or chips that can be configured by software instructions (applications) to perform a variety of functions, including the functions of the various aspects described below. In some mobile devices, multiple processors 1201 may be provided, such as one processor dedicated to wireless communication functions and one processor dedicated to running other applications. Typically, software applications may be stored in the internal memory 1202, 302, 303 before they are accessed and loaded into the processor 1201,1301. The processor 1201, 1301 may include internal memory sufficient to store the application software instructions.

Computer program code or "program code" for execution on a programmable processor for carrying out operations of the various aspects may be written in a high level programming language such as C, C++, C#, Smalltalk, Java, JavaScript, Visual Basic, a Structured Query Language (e.g., Transact-SQL), Perl, or in various other programming languages. Program code or programs stored on a computer readable storage medium as used in this application may refer to machine language code (such as object code) whose format is understandable by a processor.

Many mobile computing devices operating system kernels are organized into a user space (where non-privileged code runs) and a kernel space (where privileged code runs). This separation is of particular importance in Android® and other general public license (GPL) environments where code that is part of the kernel space must be GPL licensed, while code running in the user-space may not be GPL licensed. It should be understood that the various software components/modules discussed here may be implemented in either the kernel space or the user space, unless expressly stated otherwise.

The foregoing method descriptions and the process flow diagrams are provided merely as illustrative examples and are not intended to require or imply that the steps of the various aspects must be performed in the order presented. As will be appreciated by one of skill in the art the order of steps in the foregoing aspects may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

As used in this application, the terms "component," "module," "system," "engine," "generator," "manager" and the like are intended to include a computer-related entity, such as, but not limited to, hardware, firmware, a combination of hardware and software, software, or software in execution, which are configured to perform particular operations or functions. For example, a component may be, but is not limited to, a process running on a processor, a processor, an object, an executable, a thread of execution, a program, and/or a computer. By way of illustration, both an application running on a computing device and the computing device may be referred to as a component. One or more components may reside within a process and/or thread of execution and a component may be localized on one processor or core and/or distributed between two or more processors or cores. In addition, these components may execute from various non-transitory computer readable media having various instructions and/or data structures stored thereon. Components may communicate by way of local and/or remote processes, function or procedure calls, electronic signals, data packets, memory read/writes, and other known network, computer, processor, and/or process related communication methodologies.

The various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a multiprocessor, but, in the alternative, the processor may be any conventional processor, controller, microcontroller, or state machine. A processor may also be implemented as a combination of computing devices, e.g., a combination of a DSP and a multiprocessor, a plurality of multiprocessors, one or more multiprocessors in conjunction with a DSP core, or any other such configuration. Alternatively, some steps or methods may be performed by circuitry that is specific to a given function.

In one or more exemplary aspects, the functions described may be implemented in hardware, software, firmware, or any combination thereof. If implemented in software, the functions may be stored as one or more instructions or code on a non-transitory computer-readable medium or non-transitory processor-readable medium. The steps of a method or algorithm disclosed herein may be embodied in a processor-executable software module which may reside on a non-transitory computer-readable or processor-readable storage medium. Non-transitory computer-readable or processor-readable storage media may be any storage media that may be accessed by a computer or a processor. By way of example but not limitation, such non-transitory computer-readable or processor-readable media may include RAM, ROM, EEPROM, FLASH memory, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above are also included within the scope of non-transitory computer-readable and processor-readable media. Additionally, the operations of a method or algorithm may reside as one or any combination or set of codes and/or instructions on a non-transitory processor-readable medium and/or computer-readable medium, which may be incorporated into a computer program product.

The preceding description of the disclosed aspects is provided to enable any person skilled in the art to make or use the present invention. Various modifications to these aspects will be readily apparent to those skilled in the art, and the generic principles defined herein may be applied to other aspects without departing from the scope of the invention. Thus, the present invention is not intended to be limited to the aspects shown herein but is to be accorded the widest scope consistent with the following claims and the principles and novel features disclosed herein.

In the following further examples are described to facilitate the understanding of this invention.

In a first further example a method of generating data models in a client-cloud communication system is described, comprising: applying machine learning techniques to generate a first family of classifier models that describe a cloud corpus of behavior vectors; determining which factors in the first family of classifier models have a high probably of enabling a mobile device to conclusively determine whether a mobile device behavior is malicious or benign; generating, based on the determined factors, a second family of classifier models that identify a reduced number of factors and data points as being relevant for enabling the mobile device to conclusively determine whether the mobile device behavior is malicious or benign; and generating a mobile device classifier module based on the second family of classifier models. Also, applying machine learning techniques to generate a first family of classifier models that describe a cloud corpus of behavior vectors may comprise: generating the first family of classifier models in a deep classifier in a server of a cloud network. Further, generating a second family of classifier models may comprise: generating the second family of classifier models in a lean classifier in a network server. Further, generating a second family of classifier models may comprise: generating the second family of classifier models in a lean classifier in the mobile device. Also, generating a second family of classifier models that identify a reduced number of factors and data points as being relevant for enabling the mobile device to conclusively determine whether the mobile device behavior is malicious or benign may comprise: generating the second family of classifier models by applying the determined factors to the cloud corpus of behavior vectors.

In another further example a server in a client-cloud communication system is described, comprising: means for applying machine learning techniques to generate a first family of classifier models that describe a cloud corpus of behavior vectors; means for determining which factors in the first family of classifier models have a high probably of enabling a mobile device to conclusively determine whether a mobile device behavior is malicious or benign; means for generating, based on the determined factors, a second family of classifier models that identify a reduced number of factors and data points as being relevant for enabling the mobile device to conclusively determine whether the mobile device behavior is malicious or benign; and means for generating a mobile device classifier module based on the second family of classifier models. Also, means for applying machine learning techniques to generate a first family of classifier models that describe a cloud corpus of behavior vectors may comprise: means for generating the first family of classifier models in a deep classifier. Also, means for generating a second family of classifier models may comprise: means for generating the second family of classifier models in a lean classifier. Also, means for generating a second family of classifier models may comprise: means for transmitting the first family of classifier models and the determined factors to the mobile device. Also, means for generating a second family of classifier models that identify a reduced number of factors and data points as being relevant for enabling the mobile device to conclusively determine whether the mobile device behavior is malicious or benign may comprise: means for generating the second family of classifier models by applying the determined factors to the cloud corpus of behavior vectors.

In yet another further example a server in a client-cloud communication system is described, comprising: a processor configured with processor-executable instructions to perform operations comprising: applying machine learning techniques to generate a first family of classifier models that describe a cloud corpus of behavior vectors; determining which factors in the first family of classifier models have a high probably of enabling a mobile device to conclusively determine whether a mobile device behavior is malicious or benign; generating, based on the determined factors, a second family of classifier models that identify a reduced number of factors and data points as being relevant for enabling the mobile device to conclusively determine whether the mobile device behavior is malicious or benign; and generating a mobile device classifier module based on the second family of classifier models. Also, the processor may be configured with processor-executable instructions such that applying machine learning techniques to generate a first family of classifier models that describe a cloud corpus of behavior vectors may comprise: generating the first family of classifier models in a deep classifier. Also, the processor may be configured with processor-executable instructions such that generating a second family of classifier models may comprise: generating the second family of classifier models in a lean classifier. Also, the processor might be configured with processor-executable instructions such that generating a second family of classifier models may comprise: transmitting the first family of classifier models and the determined factors to the mobile device. Also, the processor might be configured with processor-executable instructions such that generating a second family of classifier models that identify a reduced number of factors and data points as being relevant for enabling the mobile device to conclusively determine whether the mobile device behavior is malicious or benign might comprise: generating the second family of classifier models by applying the determined factors to the cloud corpus of behavior vectors.

In another further example a non-transitory computer readable storage medium having stored thereon server-executable software instructions configured to cause a server processor to perform operations for generating data models in a client-cloud communication system is described, the operations comprising: applying machine learning techniques to generate a first family of classifier models that describe a cloud corpus of behavior vectors; determining which factors in the first family of classifier models have a high probably of enabling a mobile device to conclusively determine whether a mobile device behavior is malicious or benign; generating, based on the determined factors, a second family of classifier models that identify a reduced number of factors and data points as being relevant for enabling the mobile device to conclusively determine whether the mobile device behavior is malicious or benign; generating a mobile device classifier module based on the second family of classifier models. Also, the stored server-executable software instructions may be configured to cause the server processor to perform operations such that applying machine learning techniques to generate a first family of classifier models that describe a cloud corpus of behavior vectors may comprise: generating the first family of classifier models in a deep classifier in a server of a cloud network. Also, the stored server-executable software instructions may be configured to cause the server processor to perform operations such that generating a second family of classifier models may comprise: generating the second family of classifier models in a lean classifier in a network server. Also, the stored server-executable software instructions may be configured to cause the server processor to perform operations such that generating a second family of classifier models may comprise: transmitting the first family of classifier models and the determined factors to the mobile device. Also, the stored server-executable software instructions may be configured to cause the server processor to perform operations such that generating a second family of classifier models that identify a reduced number of factors and data points as being relevant for enabling the mobile device to conclusively determine whether the mobile device behavior is malicious or benign may comprise: generating the second family of classifier models by applying the determined factors to the cloud corpus of behavior vectors.

In another further example a client-cloud communication system is described, comprising: a mobile device comprising a device processor; and a server comprising a server processor configured with server-executable instructions to perform operations comprising: applying machine learning techniques to generate a first family of classifier models that describe a cloud corpus of behavior vectors; determining which factors in the first family of classifier models have a high probably of enabling the mobile device to conclusively determine whether a mobile device behavior is malicious or benign; and transmitting the first family of classifier models and the determined factors to the mobile device, wherein the device processor is configured with processor-executable instructions to perform operations comprising: generating, based on the determined factors, a second family of classifier models that identify a reduced number of factors and data points as being relevant for enabling the mobile device to conclusively determine whether the mobile device behavior is malicious or benign; and generating a mobile device classifier module based on the second family of classifier models.

In yet another further example a method of evaluating a mobile device behavior in stages is described, comprising: monitoring mobile device behaviors to generate observations; applying the observations to an initial reduced feature set model to determine whether the mobile device behavior is performance-degrading, benign, or suspicious; monitoring additional or different mobile device behaviors to generate refined observations when it is determined that the mobile device behavior is suspicious; and applying the refined observations to a subsequent reduced feature set model to determine whether the mobile device behavior is performance-degrading, performance-degrading or benign.

In another further example a mobile device is described, comprising: means for monitoring a mobile device behavior to generate observations; means for applying the observations to an initial reduced feature set model to determine whether the mobile device behavior is performance-degrading, benign, or suspicious; means for monitoring additional or different mobile device behaviors to generate refined observations when it is determined that the mobile device behavior is suspicious; and means for applying the refined observations to a subsequent reduced feature set model to determine whether the mobile device behavior is performance-degrading, performance-degrading or benign.

In another further example a mobile device is described, comprising: a processor configured with processor-executable instructions to perform operations comprising: monitoring a mobile device behavior to generate observations; applying the observations to an initial reduced feature set model to determine whether the mobile device behavior is performance-degrading, benign, or suspicious; monitoring additional or different mobile device behaviors to generate refined observations when it is determined that the mobile device behavior is suspicious; and applying the refined observations to a subsequent reduced feature set model to determine whether the mobile device behavior is performance-degrading, performance-degrading or benign.

In yet another further example a non-transitory computer readable storage medium having stored thereon processor-executable software instructions configured to cause a processor to perform operations for evaluating a mobile device behavior in stages is described, the operations comprising: monitoring mobile device behaviors to generate observations; applying the observations to an initial reduced feature set model to determine whether the mobile device behavior is performance-degrading, benign, or suspicious; monitoring additional or different mobile device behaviors to generate refined observations when it is determined that the mobile device behavior is suspicious; and applying the refined observations to a subsequent reduced feature set model to determine whether the mobile device behavior is performance-degrading, performance-degrading or benign.

In another further example a method is described, comprising: receiving observation information from a plurality of mobile devices; updating a global model of behavior classification in a server of a cloud network based on the observation information received from the plurality of mobile devices; performing machine learning operations to generate a first family of classifiers based on the global model; determining whether there are enough changes to the generated first family of classifiers to warrant generating new models; determining which features in the generated first family of classifiers are best features for enabling a mobile device processor to conclusively determine whether a mobile device behavior is malicious or benign when it is determined that there are enough changes to the first family of classifiers; generating a second family of classifiers based on the best features; determining whether there are enough changes to the generated second family of classifiers to warrant generating additional new models; generating additional classifier models when it is determined that there are enough changes to the second family of classifiers; and sending the generated additional classifier models to the mobile device processor.

In another further example a server is described, comprising: means for receiving observation information from a plurality of mobile devices; means for updating a global model of behavior classification based on the observation information received from the plurality of mobile devices; means for performing machine learning operations to generate a first family of classifiers based on the global model; means for determining whether there are enough changes to the generated first family of classifiers to warrant generating new models; means for determining which features in the generated first family of classifiers are best features for enabling a mobile device processor to conclusively determine whether a mobile device behavior is malicious or benign when it is determined that there are enough changes to the first family of classifiers; means for generating a second family of classifiers based on the best features; means for determining whether there are enough changes to the generated second family of classifiers to warrant generating additional new models; means for generating additional classifier models when it is determined that there are enough changes to the second family of classifiers; and means for sending generated additional classifier models to the mobile device processor. 58

In yet another further example a server is described, comprising: a processor configured with processor-executable instructions to perform operations comprising: receiving observation information from a plurality of mobile devices; updating a global model of behavior classification based on the observation information received from the plurality of mobile devices; performing machine learning operations to generate a first family of classifiers based on the global model; determining whether there are enough changes to the generated first family of classifiers to warrant generating new models; determining which features in the generated first family of classifiers are best features for enabling a mobile device processor to conclusively determine whether a mobile device behavior is malicious or benign when it is determined that there are enough changes to the first family of classifiers; generating a second family of classifiers based on the best features; determining whether there are enough changes to the generated second family of classifiers to warrant generating additional new models; generating additional classifier models when it is determined that there are enough changes to the second family of classifiers; and sending the generated additional classifier models to the mobile device processor.

In another further example a non-transitory computer readable storage medium having stored thereon server-executable software instructions configured to cause a server processor to perform operations is described, comprising: receiving observation information from a plurality of mobile devices; updating a global model of behavior classification in a server of a cloud network based on the observation information received from the plurality of mobile devices; performing machine learning operations to generate a first family of classifiers based on the global model; determining whether there are enough changes to the generated first family of classifiers to warrant generating new models; determining which features in the generated first family of classifiers are best features for enabling a mobile device processor to conclusively determine whether a mobile device behavior is malicious or benign when it is determined that there are enough changes to the first family of classifiers; generating a second family of classifiers based on the best features; determining whether there are enough changes to the generated second family of classifiers to warrant generating additional new models; generating additional classifier models when it is determined that there are enough changes to the second family of classifiers; and sending the generated additional classifier models to the mobile device processor.

In another further example a client-cloud communication system is described, comprising: a mobile device comprising a mobile device processor; and a server comprising a server processor, wherein the server processor is configured with server-executable instructions to perform operations comprising: receiving observation information from a plurality of mobile devices; updating a global model of behavior classification based on the observation information received from the plurality of mobile devices; performing machine learning operations to generate a first family of classifiers based on the global model; determining whether there are enough changes to the generated first family of classifiers to warrant generating new models; determining which features in the generated first family of classifiers are best features for enabling the mobile device processor to conclusively determine whether a mobile device behavior is malicious or benign when it is determined that there are enough changes to the first family of classifiers; generating a second family of classifiers based on the best features; determining whether there are enough changes to the generated second family of classifiers to warrant generating additional new models; generating additional classifier models when it is determined that there are enough changes to the second family of classifiers; and sending the generated additional classifier models to the mobile device processor as an initial reduced feature set model, and wherein the mobile device processor is configured with processor-executable instructions to perform operations comprising: receiving the initial reduced feature set model from the server; monitoring mobile device behaviors to generate observations; applying the observations to the initial reduced feature set model to determine whether the mobile device behavior is performance-degrading, benign, or suspicious; monitoring additional or different mobile device behaviors to generate refined observations when it is determined that the mobile device behavior is suspicious; applying the refined observations to a subsequent reduced feature set model to determine whether the mobile device behavior is performance-degrading, performance-degrading or benign; and sending the refined observations and a result of applying the refined observations to the server as observation information.

## Claims

1. A method of evaluating a mobile device behavior in stages, comprising:
monitoring mobile device behaviors to generate observations;
applying the observations to an initial reduced feature set model to determine whether the mobile device behavior is performance-degrading, benign, or suspicious;
monitoring additional or different mobile device behaviors to generate refined observations when it is determined that the mobile device behavior is suspicious; and
applying the refined observations to a subsequent reduced feature set model to determine whether the mobile device behavior is performance-degrading or benign.

2. A mobile device, comprising:
means for monitoring a mobile device behavior to generate observations;
means for applying the observations to an initial reduced feature set model to determine whether the mobile device behavior is performance-degrading, benign, or suspicious;
means for monitoring additional or different mobile device behaviors to generate refined observations when it is determined that the mobile device behavior is suspicious; and
means for applying the refined observations to a subsequent reduced feature set model to determine whether the mobile device behavior is performance-degrading or benign.

3. A method, comprising:
receiving observation information from a plurality of mobile devices;
updating a global model of behavior classification in a server of a cloud network based on the observation information received from the plurality of mobile devices;
performing machine learning operations to generate a first family of classifiers based on the global model;
determining whether there are enough changes to the generated first family of classifiers to warrant generating new models;
determining which features in the generated first family of classifiers are best features for enabling a mobile device processor to conclusively determine whether a mobile device behavior is malicious or benign when it is determined that there are enough changes to the first family of classifiers;
generating a second family of classifiers based on the best features;
determining whether there are enough changes to the generated second family of classifiers to warrant generating additional new models;
generating additional classifier models when it is determined that there are enough changes to the second family of classifiers; and
sending the generated additional classifier models to the mobile device processor.

4. A server, comprising:
means for receiving observation information from a plurality of mobile devices;
means for updating a global model of behavior classification based on the observation information received from the plurality of mobile devices;
means for performing machine learning operations to generate a first family of classifiers based on the global model;
means for determining whether there are enough changes to the generated first family of classifiers to warrant generating new models;
means for determining which features in the generated first family of classifiers are best features for enabling a mobile device processor to conclusively determine whether a mobile device behavior is malicious or benign when it is determined that there are enough changes to the first family of classifiers;
means for generating a second family of classifiers based on the best features;
means for determining whether there are enough changes to the generated second family of classifiers to warrant generating additional new models;
means for generating additional classifier models when it is determined that there are enough changes to the second family of classifiers; and
means for sending generated additional classifier models to the mobile device processor.

5. A non-transitory computer readable storage medium having stored thereon server-executable software instructions configured to cause a server processor to perform operations recited in claims 1 or 3.
